# EUROPEAN PATENT APPLICATION

(11) **EP 4 269 101 A1**
(43) Date of publication of application: **01.11.2023**
(21) Application number: 21909925.6
(22) Date of filing: 22.10.2021
(51) Int. Cl.: B32B 27/30, C08J 5/18, C08J 7/046

(54) **LAMINATE AND USE THEREOF**

(30) Priority: 25.12.2020 JP 2020217637
(71) Applicant: Kaneka Corporation, Osaka-shi, Osaka 530-8288 (JP)
(72) Inventor: KOYAMA, Haruki, Settsu-shi, Osaka 566-0072 (JP); HASEBE, Hanako, Settsu-shi, Osaka 566-0072 (JP); SHIMAMOTO, Yukihiro, Settsu-shi, Osaka 566-0072 (JP)
(74) Representative: Vossius & Partner Patentanwälte Rechtsanwälte mbB
(86) International application number: PCT/JP2021/039079
(87) International publication number: WO 2022/137768

(57) **Abstract**

Provided is a laminate that has excellent moldability and excellent wear resistance and that contains an acrylic-based resin film. The object can be attained by providing a laminate including: a specific acrylic-based resin film; and a specific ultraviolet-curable hard coat layer that is laminated on at least one side of the acrylic-based resin film, the laminate having a specific crack elongation and exhibiting a Δhaze of not more than 1.0% in a steel wool wear test at 50 g/cm² and 5 reciprocating motions.

## Description

### Technical Field

The present invention relates to a laminate that contains an acrylic-based resin film as a base material.

### Background Art

Acrylic-based resin film, obtained by processing and molding an acrylic-based resin composition containing an elastic body, has been used and employed in various applications, taking advantage of its excellent characteristics such as transparency, hardness, weather resistance, and secondary moldability. Examples of the applications of an acrylic-based resin film encompass: decoration and protection as an alternative to coating, in which a film is laminated on an automotive exterior and interior parts and used; the decoration and protection of the exterior of a product, such as a mobile electronic device, a personal computer, or a home appliance; and a building material.

As such an acrylic-based resin film, for example, Patent Literature 1 discloses: an acrylic-based resin film obtained by forming, into a film, a methacrylic-based resin composition (D) that includes a specific methacrylic ester-based resin (A), a rubber-containing graft copolymer (B) of a four-step structural polymer, in which the average particle size of rubber particles is 0.2 µm to 0.4 µm, and rubber-containing graft copolymer (C) of a two-layer structure polymer, in which the average particle size of rubber particles is 0.02 µm to 0.15 µm; and a laminate including the acrylic-based resin film.

Patent Literature 2 discloses, for example: an acrylic-based resin film that includes graft copolymer particles (A) of a multilayer structure, in which the average particle size is not less than 20 nm and not more than 150 nm and graft copolymer particles (B) of a multilayer structure, in which the average particle size is larger than that of the graft copolymer particles (A); and a laminated film that includes the acrylic-based resin film.

### Citation List

### [Patent Literature]

[Patent Literature 1]
   International Publication No. WO 2013/051239
[Patent Literature 2]
   International Publication No. WO 2019/181752

### Summary of Invention

### Technical Problem

Although the techniques disclosed in Patent Literatures 1 and 2 are excellent, there is room for further improvement in terms of moldability and wear resistance.

In view of the above, it is an object of the present invention to provide a laminate that has excellent moldability and excellent wear resistance and that contains an acrylic-based resin film.

### Solution to Problem

As a result of diligent research in order to attain the above object, the inventors of the present invention for the first time found that a laminate that has excellent moldability and excellent wear resistance can be obtained by using, in the laminate, an acrylic-based resin film which has specific physical properties and a specific hard coat layer (of, for example, an ultraviolet-curable type). In addition, it was found for the first time that the laminate can be obtained by adjustment of the production process of the laminate. On the basis of this finding, the present invention was achieved.

Therefore, an aspect of the present invention is a laminate (hereinafter referred to as "present laminate") including: an acrylic-based resin film; and a hard coat layer that is laminated on at least one side of the acrylic-based resin film, the acrylic-based resin film having a glass transition temperature (Tg) of not higher than 140°C and an elongation at break of not less than 200% at 120°C, and the laminate exhibiting a crack elongation of not less than 50% at 120°C and a Δhaze of not more than 1.0% in a steel wool wear test at 50 g/cm² and 5 reciprocating motions.

In addition, an aspect of the present invention is a production method (hereinafter referred to as "present laminate production method") for a laminate which includes acrylic-based resin film and a hard coat layer laminated on at least one side of acrylic-based resin film, said method including a curing step of said hard coat layer carried out on a cooling roller by UV irradiation on the hard coat layer applied to at least one side of the acrylic-based resin film, a cumulative amount of UV light in the UV irradiation being 150 mJ/cm² to 500 mJ/cm², the cooling roller having a temperature of 25°C to 70°C, the acrylic-based resin film having a glass transition temperature of not higher than 140°C and an elongation at break of not less than 200% at 120°C, and the laminate exhibiting a crack elongation of not less than 50% at 120°C and a Δhaze of not more than 1.0% in a steel wool wear test at 50 g/cm² and 5 reciprocating motions.

In addition, an aspect of the present invention is a method of producing a molded product (hereinafter referred to as "present molded product production method"), including the step of shaping the following laminate with a molding temperature during preforming being not higher than 140°C:
the laminate including an acrylic-based resin film and a hard coat layer that is laminated on at least one side of the acrylic-based resin film, the acrylic-based resin film having a glass transition temperature of not higher than 140°C and an elongation at break of not less than 200% at 120°C, and the laminate exhibiting a crack elongation of not less than 50% at 120°C and a Δhaze of not more than 1.0% in a steel wool wear test at 50 g/cm² and 5 reciprocating motions.

### Advantageous Effects of Invention

With an aspect of the present invention, it is possible to provide a laminate that has excellent moldability and excellent wear resistance and that contains an acrylic-based resin film.

### Description of Embodiments

The following description will discuss an embodiment of the present invention in detail. Any numerical range expressed as "A to B" in the present specification means "not less than A and not more than B", unless otherwise stated. All the documents cited in the present specification are incorporated herein by reference.

### [1. Overview of present invention]

In recent years, the field of on-vehicle display has undergone an increase in size and curvature. Such an on-vehicle display film is required to be a film that can be subjected to curved surface molding and that has sufficient qualities in wear resistance (also referred to as abrasion resistance and scratch and/or mar resistance), antireflection, reliability etc. For such applications, the following are widely used: a multilayer film obtained by laminating a polycarbonate-based resin and an acrylic-based resin; and a functional film obtained by forming, on the multilayer film, a functional layer that has functions such as abrasion resistance, anti-dazzling property, antireflection property, and antifouling property through coating etc. However, it is difficult for such a film to carry out secondary molding process properly, and whitening, delamination, peeling off of a functional layer, etc. could be induced due to the film being made of laminate of two types of base material layers with different heat resistance. And such a film may be peeled off from the display surface with long-time use. Furthermore, since the polycarbonate resin has a large intrinsic phase difference, there are issues such as iridescent patterns or decreases in the contrast on the display surface by stretching due to secondary molding process. On the other hand, the acrylic-based resin film has excellent properties such as transparency, hardness, weather resistance, excellent optical properties with small phase difference even after stretched, and secondary moldability, as discussed above. Therefore, the inventors of the present invention investigated the application of acrylic-based resin films to on-vehicle displays.

First, the inventors of the present invention attempted to increase the strength of the hard coat layer in terms of enhancing wear resistance in a laminate containing an acrylic-based resin film and a hard coat layer. As a result, although it was easy to increase the strength of the hard coat layer itself, the inventors found that when the strength of the hard coat layer is high, there appears a new problem that the hard coat layer may be cracked in molding, so that the laminated cannot be molded.

Therefore, the inventors of the present invention diligently studied a laminate capable of realizing both moldability and wear resistance, and succeed in obtaining the findings below.
· Excellent moldability is ensured by using an acrylic-based resin film with a glass transition temperature (Tg) of not higher than 140°C and an elongation at break of not less than 200% at 120°C.
The wear resistance of the laminate is strengthened when, in the step of producing a hard coat layer, the cumulative amount of UV light is controlled to be within the range of 150 mJ/cm² to 500 mJ/cm² and the cooling roller temperature during UV irradiation is controlled to be within the range of 25°C to 70°C (preferably 40°C to 70°C).

The present laminate was obtained based on the above findings and can achieve excellent moldability and wear resistance simultaneously. An acrylic-based resin film-containing laminate that has such excellent moldability and excellent wear resistance has not been previously reported, and is an extremely excellent technique.

As discussed above, the present laminate can achieve excellent moldability and wear resistance simultaneously. This can contribute, for example, to the achievement of Sustainable Development Goals (SDGs), such as Goal 12 "Ensure sustainable consumption and production patterns". The following description will discuss the features of the present laminate.

### [2. Laminate]

The present laminate includes: an acrylic-based resin film; and a hard coat layer that is laminated on at least one side of the acrylic-based resin film.

### (Acrylic-based Resin Film)

The acrylic-based resin film is constituted by an acrylic-based resin composition that contains an acrylic resin and graft copolymer particles containing a rubber component. The acrylic-based resin film preferably contains graft copolymer particles (A) having an average particle size of not less than 20 nm and not more than 200 nm as the graft copolymer particles containing a rubber component, and may contain, in addition to the graft copolymer particles (A), graft copolymer particles (B) having an average particle size larger than that of the graft copolymer particles (A). Specifically, in the acrylic-based resin film, the graft copolymer particles (A) are dispersed or the graft copolymer particles (A) and the graft copolymer particles (B) are dispersed in a matrix containing an acrylic resin, or an acrylic resin and other components.

### <Acrylic Resin>

Conventionally known acrylic resins can be used for the acrylic-based resin film. For example, when the total amount of the acrylic resin is determined as 100% by mass, it is preferable from the viewpoint of hardness and moldability that the acrylic resin contain not less than 20% by mass and not more than 100% by mass of a thermoplastic acrylic polymer which is constituted by not less than 50% by mass and not more than 100% by mass of a methyl methacrylate unit and not less than 0% by mass and not more than 50% by mass of other structural unit.

Examples of the other structural unit include structural units derived from acrylic acid, acrylic acid derivatives, methacrylic acid, methacrylic acid derivatives, aromatic vinyl derivatives, vinyl cyanide derivatives, vinylidene halides, etc. The other structural unit contained in the acrylic resin may be one type or may be a combination of two or more types.

Examples of the acrylic acid derivatives include acrylic esters such as methyl acrylate, ethyl acrylate, n-propyl acrylate, n-butyl acrylate, isobutyl acrylate, t-butyl acrylate, cyclohexyl acrylate, 2-hydroxyethyl acrylate, 2-phenoxyethyl acrylate, benzyl acrylate, 2-(N,N-dimethylamino)ethyl acrylate, and glycidyl acrylate.

Examples of the methacrylic acid derivatives include methacrylic esters such as ethyl methacrylate, n-propyl methacrylate, n-butyl methacrylate, isobutyl methacrylate, t-butyl methacrylate, phenyl methacrylate, benzyl methacrylate, cyclohexyl methacrylate, 2-phenoxyethyl methacrylate, isobornyl methacrylate, dicyclopentenyl methacrylate, glycidyl methacrylate, and adamanthyl methacrylate.

Examples of the aromatic vinyl derivatives include styrene, vinyl toluene, and α-methylstyrene.

Examples of the cyanide vinyl derivatives include acrylonitrile and methacrylonitrile.

Examples of the vinylidene halides include vinylidene chloride and vinylidene fluoride.

To improve the heat resistance, rigidity, surface hardness, etc. of the acrylic resin, the structural unit having a specific structure may be introduced into the acrylic resin by copolymerization, functional group introduction or modification, etc. Examples of such a specific structure include: a glutarimide structure as disclosed in Japanese Patent Application Publication No. 62-89705, Japanese Patent Application Publication No. 02-178310, and WO 2005/54311; a lactone ring structure as disclosed in Japanese Patent Application Publication No. 2004-168882 and Japanese Patent Application Publication No. 2006-171464; a glutaric anhydride structure obtained by thermal cyclocondensation of a (meth)acrylic acid unit as disclosed in Japanese Patent Application Publication No. 2004-307834; a maleic anhydride structure as disclosed in Japanese Patent Application Publication No. 5-119217; and an N-substituted maleimide structure and a non-substituted maleimide structure as disclosed in WO2009/84541. For example, the introduction of these structures into the acrylic resin makes the molecular chain rigid. As a result, the effect of improving the heat resistance, improving the surface hardness, reducing the heat shrinkage, improving the chemical resistance etc. can be expected.

The method of producing the acrylic resin is not particularly limited. Examples of the method include polymerization methods such as known suspension polymerization, bulk polymerization, solution polymerization, emulsion polymerization, and dispersion polymerization. It is also possible to use any of known radical polymerization, living radical polymerization, anionic polymerization, and cationic polymerization.

### <Graft copolymer containing rubber component>

As previously discussed, the acrylic-based resin film preferably contains the graft copolymer particles (A) as rubber component-containing graft copolymer particles and may also contain the graft copolymer particles (B) in addition to the graft copolymer particles (A) if necessary.

The graft copolymer particles (A) preferably have a coreshell structure (multilayer structure) including a crosslinked elastomer (A1) which is a rubber component and a graft polymer layer (A2) which is located closer to a surface than the crosslinked elastomer (A1) is.

The crosslinked elastomer (A1) may be a known crosslinked elastomer. Preferably, the crosslinked elastomer (A1) is an acrylic ester-based crosslinked elastomer (crosslinked elastomer consisting of a polymer containing an acrylic ester as a main component).

The particles of the acrylic ester-based crosslinked elastomer (A1) may have a concentric spherical, multilayer structure that includes a rigid or semi-rigid crosslinked resin layer inside the crosslinked elastomer layer. Examples of such a rigid or semi-rigid crosslinked resin layer include: a rigid crosslinked methacrylic resin particles as disclosed in Japanese Examined Patent Publication No. 55-27576; semi-rigid crosslinked particles consisting of methyl methacrylate-acrylic ester-styrene as disclosed in Japanese Patent Application Publication No. 4-270751; and crosslinked rubber particles with a high crosslinking degree. Improvement in transparency, color tone, etc. may be expected by including such a rigid or semi-rigid crosslinked resin layer.

The graft copolymer particles (A) preferably have a coreshell structure that is formed by graft polymerization of the graft polymer layer (A2) in the presence of particles of the aforementioned acrylic ester-based crosslinked elastomer (A 1).

The average particle size of the graft copolymer particles (A) is not less than 20 nm and not more than 200 nm, more preferably not less than 50 nm and not more than 150 nm, and particularly preferably not less than 50 nm and not more than 120 nm.

In a case where the average particle size of the graft copolymer particles (A) is excessively small, there is a tendency that the impact resistance and bending crack resistance of the acrylic-based resin film decrease. In a case where the average particle size of the graft copolymer particles (A) is excessively large, there is a tendency that the transparency of the acrylic-based resin film deteriorates and a tendency that whitening due to bending processing is more likely to occur.

The acrylic ester-based crosslinked elastomer (A1) is preferably crosslinked elastomer particles obtained by polymerizing a monomer mixture (a-1) containing: acrylic ester; optionally other vinyl-based monomer copolymerizable with the acrylic ester; and a polyfunctional monomer which is copolymerizable with the acrylic ester and which has two or more non-conjugated double bond per molecule.

The acrylic ester, other vinyl-based monomer, and the polyfunctional monomer may be polymerized in a single step after mixing all of them. Alternatively, for the purpose of adjusting the toughness, whitening resistance, etc. of the acrylic-based resin film, the acrylic ester, the other vinyl-based monomer, and the polyfunctional monomer may be polymerized in multiple steps of two or more, while changing the composition of the acrylic ester, the other vinyl-based monomer, and the polyfunctional monomer, or maintaining the identical composition.

The acrylic ester is preferably a fatty ester of acrylic acid, more preferably an alkyl acrylic ester, and particularly preferably an alkyl acrylic ester with an alkyl group having not less than 1 and not more than 22 carbon atoms.

Specific examples of the preferable alkyl acrylic ester include methyl acrylate, ethyl acrylate, propyl acrylate, n-butyl acrylate, isobutyl acrylate, 2-ethylhexyl acrylate, n-octyl acrylate, isobornyl acrylate, cyclohexyl acrylate, dodecyl acrylate, stearylic acrylate, heptadesyl acrylate, octadecyl acrylate, and the like. They may be used alone or two or more of them may be used in combination.

The amount of acrylic ester is preferably not less than 50% by mass, more preferably not less than 70% by mass, and most preferably not less than 80% by mass with respect to 100% by mass of the monomer mixture (a-1). When the amount of acrylic ester is not less than 50% by mass, the acrylic-based resin film has good impact resistance and elongation during tensile break, and cracks are less likely to occur during secondary molding.

Examples of the other vinyl-based monomer include: methacrylic esters such as methyl methacrylate, ethyl methacrylate, propyl methacrylate, n-butyl methacrylate, isobutyl methacrylate, t-butyl methacrylate, phenyl methacrylate, benzyl methacrylate, cyclohexyl methacrylate, phenoxyethyl methacrylate, isobornyl methacrylate, and dicyclopentenyl methacrylate; vinyl halides such as vinyl chloride and vinyl bromide; vinyl cyanide derivatives such as acrylonitrile and methacrylonitrile; vinyl esters such as vinyl formate, vinyl acetate, and vinyl propionate; aromatic vinyl derivatives such as styrene, vinyl toluene, and α-methyl styrene; vinylidene halides such as vinylidene chloride and vinylidene fluoride; acrylic acid; salts of acrylic acid such as sodium acrylate and calcium acrylate; acrylic acid derivatives such as β-hydroxyethyl acrylate, phenoxyethyl acrylate, benzyl acrylate, dimethylaminoethyl acrylate, glycidyl acrylate, acrylamide, and N-methylol acrylamide; methacrylic acid; salts of methacrylic acid such as sodium methacrylate and calcium methacrylate; methacrylic acid derivatives such as methacrylamide, β-hydroxyethyl methacrylate, dimethylaminoethyl methacrylate, and glycidyl methacrylate; maleic anhydride; and maleic acid derivatives such as N-alkylmaleimide and N-phenylmaleimide. They may be used alone or two or more of them may be used in combination. Among them, one or more selected from the group consisting of methacrylic esters and aromatic vinyl derivatives are particularly preferable in terms of weather resistance and transparency.

The amount of the other vinyl-based monomer is preferably not less than 0% by mass and not more than 49.9% by mass, more preferably not less than 0% by mass and not more than 30% by mass, and most preferably not more than 0% by mass and not more than 20% by mass with respect to 100% by mass of the monomer mixture (a-1). When the amount of the other vinyl-based monomer is more than 49.9% by mass, the impact resistance of the acrylic-based resin film is likely to decrease, and the elongation at tensile break decreases and cracks may easily occur during secondary molding.

A polyfunctional monomer may be one that is usually used as a crosslinking agent and/or a graft crossover agent. Examples of the polyfunctional monomer include allyl methacrylate, allyl acrylate, triallyl cyanurate, triallyl isocyanurate, diallyl phthalate, diallyl maleate, divinyladipate, divinylbenzene, ethylene glycol dimethacrylate, propylene glycol dimethacrylate, diethylene glycol dimethacrylate, triethylene glycol dimethacrylate, trimethylrolol propane trimethacrylate, polyethylene glycol dimethaacrylate, and dipropylene glycol dimethacrylate. These polyfunctional monomers may be used alone or two or more of them may be used in combination.

As these polyfunctional monomers, one with a function as a graft crossover agent is more preferable. This is because such a polyfunctional monomer increases the number of the polymer grafted to the crosslinked elastomer (A1) in the graft polymer layer (A2) (which is described below), resulting in good dispersion of the graft copolymer (A) into the acrylic resin, improving the crack resistance against tensile and bending deformation and reducing stress whitening. As a polyfunctional monomer with such a function of the graft crossover agent, those having an allyl group such as allyl methacrylate, allyl acrylate, triallyl cyanurate, triallyl isocyanurate, diallyl phthalate, diallyl maleate, etc. are preferable, and allyl methacrylate, allyl acrylate, etc. are particularly preferable.

The amount of the polyfunctional monomer is preferably not less than 0.1% by mass and not more than 10% by mass, and more preferably not less than 1.0% by mass and not more than 4% by mass with respect to 100% by mass of the monomer mixture (a-1). The amount of the polyfunctional monomer to be mixed being within the above range is preferable in terms of the bending cracking resistance and bending whitening resistance of the acrylic-based resin film and the flowability of the resin during molding.

In addition, in the acrylic ester-based crosslinked elastomer (A1), the amount of the polyfunctional monomer may be changed between the inside and the vicinity of the surface of the crosslinked elastomer (A1) for the purpose of increasing the graft coverage efficiency of the graft polymer layer (A2) described below. Specifically, when the content of the polyfunctional monomer with a function as a graft crossover agent is greater in the vicinity of the surface of the crosslinked elastomer (A1) than the content inside the crosslinked elastomer (A1), it is possible to improve the coverage of the graft copolymer particles (A) with a graft polymer layer, leading to better dispersibility to the acrylic resin or to suppress the decrease in crack resistance due to the peeling of the interface between the graft copolymer particles (A) and the acrylic resin, as disclosed in the publication of Patent No. 1460364, the publication of Patent No. 1786959, etc. Furthermore, since sufficient coverage can be obtained with a relatively small amount of the graft polymer layer (A2), it is possible to reduce the amount of the graft copolymer particles (A) to be mixed for introducing a given amount of the crosslinked elastomer (A1) into the acrylic-based resin composition, and therefore reduction in melt viscosity of the acrylic-based resin composition, improvement in melting processability, an increase in film processing accuracy, surface hardness of the acrylic-based resin film etc. can be expected.

Chain transfer agent may be added to the monomer mixture (a-1) for the purpose of controlling the molecular weight and crosslinking density of the acrylic ester-based crosslinked elastomer (A1) and controlling thermal stability etc. by decreasing the double bond terminal of the polymer caused by a disproportionate termination reaction during polymerization. The chain transfer agent may be selected from those usually used for radical polymerization. Preferable examples of the chain transfer agent include: monofunctional or polyfunctional mercaptan compounds having not less than 2 and not more than 20 carbon atoms, such as n-octylmercaptane, n-dodecylmercaptan, and t-dodecylmercaptan; mercaptoic acids; thiophenol; carbon tetrachloride; or a mixture thereof. The amount of the chain transfer agent to be added is preferably not less than 0 part by mass and not more than 1.0 part by mass, and more preferably not less than 0 part by mass and not more than 0.2 part by mass with respect to the total amount of 100 part by mass of the monomer mixture (a-1).

The particles of the crosslinked elastomer (A1) may be a single layer consisting of the aforementioned acrylic ester-based crosslinked elastomer (A1). Alternatively, the particles of the crosslinked elastomer (A1) may have a multilayer structure that contains two or more layers consisting of the aforementioned acrylic ester-based crosslinked elastomer (A1). Alternatively, the particles of the crosslinked elastomer (A1) may be multilayer particles having a rigid or semi-rigid crosslinked resin layer at least one layer of which contains the acrylic ester-based crosslinked elastomer (A1).

Examples of the monomer constituting the rigid or semi-rigid crosslinked resin layer include: methacrylic esters such as methyl methacrylate, ethyl methacrylate, butyl methacrylate, benzyl methacrylate, and phenoxyethyl methacrylate; alkyl acrylic esters such as methyl acrylate, ethyl acrylate, propyl acrylate, n-butyl acrylate, isobutyl acrylate, t-butyl acrylate, 2-ethylhexyl acrylate, and n-octyl acrylate; aromatic vinyl derivatives such as styrene and α-methylstyrene; vinyl cyanide derivatives such as acrylonitrile; maleic acid derivatives such as maleic anhydride and maleimides; and polyfunctional monomers having two or more non-conjugated double bonds per molecule.

Among them, one or more selected from the group consisting of methyl methacrylate, butyl methacrylate, butyl acrylate, ethyl acrylate, styrene, acrylonitrile, and the like is especially preferable. The polyfunctional monomer may be similar to one used for polymerization of the acrylic ester-based crosslinked elastomer (A1) layer. Furthermore, when polymerizing the rigid or semi-rigid crosslinked resin layer, a chain transfer agent may be added in addition to these monomers for the purpose of controlling crosslinking density and controlling thermal stability etc. by decreasing the double bond terminal of the polymer. The chain transfer agent may be similar to one used for polymerization of the acrylic ester-based crosslinked elastomer (A1) layer. The amount of the chain transfer agent to be added is preferably not less than 0 part by mass and not more than 2 part by mass, and more preferably not less than 0 part by mass and not more than 0.5 part by mass with respect to the total amount of 100 part by mass of the rigid or semi-rigid crosslinked resin layer.

In a case where the graft copolymer particles (A) have a two-layer structure including the crosslinked elastomer particles (A1) which are core particles and the graft polymer layer (A2), the graft copolymer particles (A) can typically be obtained as follows: in the presence of the crosslinked elastomer particles (A1), a monomer mixture (a-2) containing not less than 50% by mass and not more than 100% by mass of methacrylic ester and not less than 0% and not more than 50% by mass of other vinyl-based monomer copolymerizable with methacrylic ester, to form the graft polymer layer (A2).

The amount of methacrylic ester in the monomer mixture (a-2) is preferably not less than 50% by mass, more preferably not less than 70% by mass, and even more preferably not less than 90% by mass from the viewpoint of ensuring the compatibility with acrylic resin which is a matrix, and preventing a decrease in toughness of the coating film derived from impregnation etc. of an acrylic-based resin film with the solvent during coating and preventing whitening and cracking due to stretching during molding.

The graft polymer layer (A2) is preferably obtained by graft copolymerization of not less than 10 parts by mass and not more than 95 parts by mass of the monomer mixture (a-2) containing not less than 70% by mass and not more than 99% by mass of alkyl methacrylic ester, not less than 0.5% by mass and not more than 30% by mass of alkyl acrylic ester having 2 or more carbon atoms in an alkyl group, and not less than 0% by mass and not more than 19% by mass of other vinyl-based monomer in at least one step in the presence of the crosslinked elastomer particles (A1) of not less than 5 parts by mass and not more than 90 parts by mass of. Note that the total amount of the crosslinked elastomer particles (A1) and the monomer mixture (a-2) shall be 100 parts by mass.

Examples of the methacrylic ester in the graft polymer layer (A2) encompass alkyl methacrylic esters such as methyl methacrylate, ethyl methacrylate, propyl methacrylate, n-butyl methacrylate, isobutyl methacrylate, t-butyl methacrylate, hexyl methacrylate, cyclohexyl methacrylate, 2-ethylhexyl methacrylate, octyl methacrylate, phenyl methacrylate, and benzyl methacrylate. Among these, alkyl methacrylic ester having 1 to 4 carbon atoms in an alkyl group is preferable.

In the graft polymer layer (A2), the other vinyl-based monomer may be an alkyl acrylic ester having 2 or more carbon atoms in an alkyl group. The alkyl acrylic ester having 2 or more carbon atoms in an alkyl group is preferably at least one selected from the group consisting of ethyl acrylate, propyl acrylate, n-butyl acrylate, isobutyl acrylate, t-butyl acrylate, hexyl acrylate, cyclohexyl acrylate, octyl acrylate, dodecyl acrylate, stearyl acrylate etc., more preferably at least one selected from the group consisting of ethyl acrylate, n-butyl acrylate, isobutyl acrylate, and t-butyl acrylate, and particularly preferably n-butyl acrylate.

Examples of the other vinyl-based monomer usable in the monomer mixture (a-2) include: aromatic vinyl derivatives such as styrene and its nuclear substituents; vinyl cyanate derivatives such as acrylonitrile; methacrylic acid and its derivatives; acrylic acid and its derivatives; N-substituted maleimides; maleic anhydride; methacryl amide, acryl amide etc.

The monomer mixture (a-2) preferably contains a reactive ultraviolet absorber as the other vinyl-based monomer. In other words, the graft polymer layer (A2) preferably contains a structural unit derived from a reactive ultraviolet absorber. When the monomer mixture (a-2) contains a reactive ultraviolet absorber, it is easy to obtain an acrylic-based resin film with good weather resistance and chemical resistance.

The reactive ultraviolet absorber may be a known reactive ultraviolet absorber and is not particularly limited. In view of the molding processability and weather resistance of the acrylic-based resin film, the compound represented by the following general formula (1) is preferable as the reactive ultraviolet absorber. 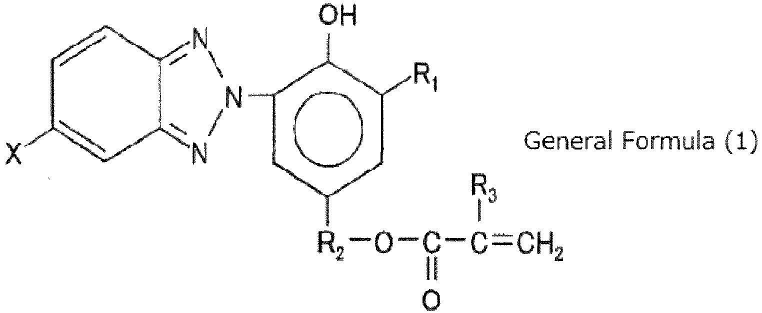 wherein X is a hydrogen atom or halogen atom, R₁ is a hydrogen atom, a methyl group, or a t-alkyl group having not less than 4 and not more than 6 carbon atoms, R₂ is a linear or a branched-chain alkylene group having not less than 2 and not more than 10 carbon atoms, and R₃ is a hydrogen atom or methyl group.

Specific examples of the reactive ultraviolet absorber represented by the general formula (1) include 2-(2'-hydroxy-5'-(meth)acryloyloxyethylphenyl)-2H-benzotriazoles. More specific examples thereof include 2-(2'-hydroxy-5'-acryloyloxyethylphenyl)-2H-benzotriazole, 2-(2'-hydroxy-5'-methacryloyloxyethylphenyl-2H-benzotriazole, 2-(2'-hydroxy-5'-methacryloyloxyethylphenyl)-5-chloro-2H-benzotriazole, 2-(2'-hydroxy-5'-methacryloyloxyphenyl)-2H-benzotriazole, 2-(2'-hydroxy-5'-methacryloyloxyethyl-3'-t-butylphenyl)-2H-benzotriazole, etc. Preferably, for cost and handleability, 2-(2'-hydroxy-5'-methacryloyloxyethylphenyl)-2H-benzotriazole is used.

The content of the structural unit derived from the reactive ultraviolet absorber in the graft polymer layer (A2) is preferably not less than 0.01% by mass and not more than 5% by mass, and more preferably not less than 0.1% by mass and not more than 3% by mass.

In the production of the graft copolymer particles (A), particularly in the graft copolymerization of the monomer mixture (a-2) in the presence of crosslinked elastomer particles (A1), such as acrylic ester-based crosslinked elastomer particles (A1), there is a case where a polymeric component that is not grafted to the acrylic ester-based crosslinked elastomer particles (A1) (free polymer) is produced. Such a free polymer may be used as a part of or a whole of an acrylic resin constituting the matrix phase of the acrylic-based resin composition and the acrylic-based resin film.

A chain transfer agent may be added to the monomer mixture (a-2) for the purpose of controlling the molecular weight of the polymer, controlling the ratio of the polymer grafted to the crosslinked elastomer (A1), controlling the amount of production of a free polymer which is not bonded to the crosslinked elastomer (A1), and controlling thermal stability, etc. by decreasing terminal double bond of the polymer caused by disproportionate termination reaction during polymerization. The chain transfer agent may be similar to one used for polymerization of the crosslinked elastomer (A1). The amount of the chain transfer agent to be used is not less than 0 part by mass and not more than 2 part by mass, and preferably not less than 0 part by mass and not more than 0.5 part by mass with respect to the total amount of 100 part by mass of the monomer mixture (a-1).

The grafting ratio of the monomer mixture (a-2) relative to the crosslinked elastomer particles (A1) is preferably not less than 5% and not more than 250%, more preferably not less than 10% and not more than 200%, and further more preferably not less than 20% and not more than 150%. When the grafting ratio is less than 5%, there is a tendency that the bending whitening resistance of the acrylic-based resin film is decreased, transparency is decreased, and the elongation at tensile break is decreased so that cracks are more likely to occur during secondary molding. When the grafting ratio is higher than 250%, the melt viscosity of the acrylic-based resin composition tends to be higher during film molding, and the moldability of the acrylic-based resin film tends to decrease.

The average particle size d (nm) of the crosslinked elastomer particles (A1) in the acrylic-based resin film and the amount w (mass%) of the polyfunctional monomer used for the acrylic ester-based crosslinked elastomer preferably meet the relational equation: 0.015d≤w≤0.06d and more preferably 0.02d≤w≤0.05d. When the amount of the polyfunctional monomer is within the range of the above relational equation, the following advantages are brought about: the elongation of the acrylic-based resin film is not likely to decrease during secondary molding; cracks are less likely to occur during molding processing and cutting; the acrylic-based resin film has excellent transparency; and stress whitening is difficult to occur during bending and tensile deformation at a normal temperature, at a high temperature above the softening temperature of the acrylic-based resin film, or at a low temperature between the normal temperature and Tg of the crosslinked elastomer particles (A1).

As previously discussed, the graft copolymer particles (B) used as needed also include a crosslinked elastomer (B1) that is a rubber component similarly to the graft copolymer particles (A). The graft copolymer particles (B) typically include a graft polymer layer (B2) which is located closer to a surface than the crosslinked elastomer (B1), similarly to the graft copolymer particles (A). That is, the graft copolymer particles (B) preferably include the crosslinked elastomer (B1) and the graft polymer layer (B2).

The graft copolymer particles (B) may be generally similar to the graft copolymer particles (A) in terms of raw material, production method, etc., except that the graft copolymer particles (B) have an average particle size larger than that of the graft copolymer particles (A). Preferably, particles of the acrylic ester-based crosslinked elastomer (B1) have a concentric spherical multilayer structure that contains a rigid or semi-rigid crosslinked resin layer inside the crosslinked elastomer layer. Examples of such a rigid or semi-rigid crosslinked resin layer include: a rigid crosslinked methacrylic resin particles as disclosed in Japanese Examined Patent Application No. 55-27576; and crosslinked particles having a semi-rigid layer and consisting of methyl methacrylate-acrylic acid ester-styrene copolymers as disclosed in Japanese Patent Application Publication No. 4-270751, WO2014/41803 etc. By introducing such a rigid or semi-rigid crosslinked resin layer, it is possible to improve the transparency, bending whitening resistance, bending cracking resistance, etc. of the graft copolymer particles (B) with a larger particle size than that of the graft copolymer particles (A).

The average particle size of the graft copolymer particles (B) is preferably not less than 150 nm and not more than 400 nm, and more preferably not less than 200 nm and not more than 350 nm.

The average particle size of the graft copolymer particles (B) is larger than the average particle size of the graft copolymer particles (A). The graft copolymer particles (B) with a large average particle size more effectively induce plastic deformation (craze) in the acrylic resin phase around the graft copolymer particles against the action of external force on the acrylic-based resin material. For this reason, the graft copolymer particles (B) have a very excellent effect in providing the acrylic resin material with impact resistance and crack resistance. On the other hand, the graft copolymer particles (B) are inferior to the graft copolymer particles (A) in terms of bending whitening resistance and solvent whitening resistance, etc. In view of the above, for example, by adding a little amount of the graft copolymer particles (B) to an acrylic-based resin composition containing the acrylic resin and the graft copolymer particles (A), the following effects can be expected: the total content of soft components with respect to the acrylic-based resin film is lowered so that the surface hardness of the acrylic-based resin film is not lowered; whitening resistance properties are not likely to deteriorate during the application of external stress on the acrylic-based resin film, during the application of a coating solution containing an organic solvent, and during molding; and cracking resistance and secondary moldability of a functional film are efficiently improved.

In one or more embodiments of the present invention, the average particle size of the graft copolymer particles (A) and the graft copolymer particles (B) can be measured using a particle size distribution measuring device of a laser diffraction type, such as the Microtrac (TM) particle size distribution measuring device MT3000, manufactured by Nikkiso Co., Ltd., and using a light scattering method in a latex state.

The method of producing the graft copolymer particles (A) and the graft copolymer particles (B) is not particularly limited, and known emulsion polymerization, miniemulsion polymerization, suspension polymerization, bulk polymerization, solution polymerization, or dispersion polymerization is applicable. The emulsion polymerization is particularly preferable in view of the large adjustable width of the resin structure.

As an initiator used in the emulsion polymerization of the graft copolymer particles (A) or the graft copolymer particles (B), known initiators such as an organic-based peroxide, an inorganic-based peroxide, and an azo compound may be used. Specifically, organic-based peroxides such as t-butylhydroperoxide, 1,1,3,3-tetramethylbutylhydroperoxide, succinic acid peroxide, peroxymaleic acid t-butyl ester, cumene hydroperoxide, benzoyl peroxide, and lauroyl peroxide; inorganic-based peroxides such as potassium persulfate, sodium persulfate, and ammonium persulfate; and azo compounds such as azobisisoobutyronitrile can be used. These may be used alone, or two or more of them may be used in combination.

These initiators may be used as a radical polymerization initiator of a pyrolytic type. Alternatively, these initiators may be used as a polymerization initiator system of a redox type, which is obtained by combining these initiators with reducing agents such as sodium sulfite, sodium thiosulfate, sodium formaldehyde sulfoxylate, ascorbic acid, hydroxyacetone acid, ferrous sulfate, and the like. Ferrous sulfate may be used in combination with a complex such as ethylenediaminetetraacetic acid-2-sodium.

Among them, it is more preferable to use inorganic-based peroxides, such as potassium persulfate, sodium persulfate, and ammonium persulfate, or to use a redox initiator system obtained by combining organic-based peroxides, such as t-butyl hydroperoxide and cumene hydroperoxide, with an inorganic-based reductant, such as a divalent iron salt, and/or an organic-based reductant, such as sodium formaldehyde sulfoxylate, reducing sugar, and ascorbic acid, in terms of polymerization stability and particle size control.

The aforementioned inorganic or organic peroxides may be added by a known method, such as by adding them intact in a polymerization system, by mixing them in a monomer, or by adding them while they are dispersed in an aqueous emulsifying agent. In view of the transparency of the acrylic-based resin film, addition of the inorganic or organic peroxides by mixing them with a monomer and addition of them by dispersing them in an aqueous emulsifier solution are preferable.

Surfactants (also referred to as emulsifiers) used for emulsion polymerization of the graft copolymer particles (A) and the graft copolymer particles (B) are not particularly limited. For emulsion polymerization, known surfactants can be widely used. Preferable examples of the surfactants include: anionic surfactants such as alkylsulfonic acid, alkylbenzenesulfonic acid, dioctylsulfosuccinic acid, alkyl sulfate, sodium fatty acid, polyoxyethylene alkyl ether acetic acid, alkyl phosphate, alkyl ether phosphate, alkylphenyl ether phosphate, sodium salt such as surfactin, potassium salt, and ammonium salt; and non-ionic surfactants such as reaction products of alkylphenols and aliphatic alcohols and propylene oxide and ethylene oxide. For alkyl ether phosphate and its salts, for example, polyoxyethylene lauryl ether phosphate and its sodium salt, etc. may be preferably used. These may be used alone, or two or more of them may be used in combination.

The graft copolymer particles (A) or graft copolymer particles (B) can be separated and collected by known methods from the latex of the graft copolymer particles (A) or the latex of the graft copolymer particles (B) that are obtained by emulsion polymerization. For example, the graft copolymer particles (A) or the graft copolymer particles (B) can be separated and collected by flocculating the latex by adding a water-soluble electrolyte such as calcium chloride and magnesium sulfate to the latex, or coagulating the latex by freezing, and then filtering, cleaning, and drying solid components. The graft copolymer particles (A) or the graft copolymer particles (B) can be separated and collected also by treatments such as spray drying, freeze drying, etc. for the latex.

For the purpose of reducing the appearance defects and internal foreign bodies of the acrylic-based resin film, before the separation and collection of the graft copolymer particles (A) or graft copolymer particles (B), the latex of the graft copolymer particles (A) or the latex of the graft copolymer particles (B) is filtered with a filter or mesh, so that substances that cause foreign body defects, such as environmental foreign bodies and polymerization scales, are removed.

As the filter or mesh, known filters or meshes used for filtration of liquid media can be used. The form of the filter or mesh, filter opening, filtration accuracy, filtration capacity, etc., may be selected as appropriate according to the application being targeted, the type, size, and the amount of a foreign body to be removed. Preferably, the opening and filtration accuracy of the filter or mesh are, for example, not less than twice the average particle size of the graft copolymer particles (A) or graft copolymer particles (B).

In the acrylic-based resin film, although the content of the graft copolymer particles (A) is not particularly limited, it is preferably not less than 1% by mass and not more than 70% by mass, more preferably not less than 5% by mass and not more than 65% by mass, and even more preferably not less than 10% by mass and not more than 60% by mass.

In the acrylic-based resin film, although the content of the graft copolymer particles (B) is not particularly limited, it is preferably not more than 20% by mass, more preferably not more than 10% by mass, and most preferably not more than 5% by mass. The lower limit is not particularly limited, and for example, not less than 1% by mass.

In the acrylic-based resin film, although the total content of the crosslinked elastomer (A1) and the crosslinked elastomer (B1) is not particularly limited, it is preferably not more than 15% by mass, even more preferably not more than 13% by mass, and most preferably not more than 12% by mass.

### <Other Components>

The acrylic-based resin film (acrylic-based resin composition constituting the acrylic-based resin film) may contain a thermoplastic resin that is at least partially compatible with an acrylic resin, if necessary, to an extent that does not compromise the purpose of the present invention. Examples of such a thermoplastic resin include styrene-based resin, polyvinyl chloride resin, polycarbonate resin, amorphous saturated polyester resin, polyamide resin, phenoxy resin, polyarylate resin, olefin-methacrylic acid derivative resin, olefin-acrylic acid derivative resin, cellulose derivatives (cellulose acylate, etc.), vinyl acetate resin, polyvinyl alcohol resin, polyvinyl acetal resin, polylactic acid resin, and PHBH (poly(3-hydroxybutyrate-co-3-hydroxyhexanoate) resin. Examples of the styrene-based resin include styrene-acrylonitrile resin, styrene-methacrylic acid resin, styrene-acrylic acid resin, styrene-maleic anhydride resin, styrene-N-substituted maleimide resin, styrene-unsubstituted maleimide resin, styrene-acrylonitrile-butadiene resin, and styrene-acrylonitrile-acrylic ester resin. Among them, one or more thermoplastic resins selected from the group consisting of the styrene-based resin, the polycarbonate resin, and the cellulose acylate resin are preferable because they have excellent compatibility with acrylic resin and may improve the bending crack resistance, solvent resistance, and low hygroscopicity of the acrylic-based resin film, and the ability of the laminate to prevent glass scattering.

The acrylic-based resin film (acrylic-based resin composition constituting the acrylic-based resin film) may also include, if necessary, conventional and known additives that are used in an acrylic-based resin film, to an extent that does not compromise the purpose of the present invention. Examples of such additives include antioxidants, ultraviolet absorbing agents, light stabilizers, light diffusing agents, matting agents, lubricants, colorants such as pigments and dyes, fibrous fillers, antiblocking agents constituted by organic particles and inorganic particles, infrared reflecting agents constituted by metals and metal oxides, plasticizers, and anti-static agents. The additives are not limited to these. These additives may be used in any amount according to the type of the additives to the extent that they do not suppress the purpose of the present invention or to enhance the effect of the present invention.

### <Physical Properties>

The glass transition temperature (Tg) of the acrylic-based resin film is not higher than 140°C, preferably not higher than 135°C, and more preferably not higher than 130°C. When the glass transition temperature of the acrylic-based resin film is not higher than 140°C, molding is possible without increasing the molding temperature, yielding an advantage that generation of cracks can be suppressed during molding. Although the lower limit is not particularly limited, the glass transition temperature is preferably, for example, not less than 100°C in terms of preventing print misalignment and improving reliability during drying of printing. The glass transition temperature of the acrylic-based resin film is measured by the method disclosed in Examples.

The elongation at break of the acrylic-based resin film at 120°C is not less than 200%, preferably not less than 210%, and more preferably not less than 220%. When the elongation at break of the acrylic-based resin film at 120°C is not less than 200%, there is an advantage of excellent shape trackability in molding. The elongation at break of the acrylic-based resin film at 120°C is measured by the method disclosed d in Examples.

The elongation at break of the acrylic-based resin film at 23°C is preferably not less than 20%, more preferably not less than 25%, and even more preferably not less than 30%. When the elongation at break of the acrylic-based resin film at 23°C is not less than 20%, cracks are less likely to be generated during handling, such as transport and cutting processing, of the acrylic-based resin film or the present laminate at a normal temperature, thereby making the handling easier. The elongation at break of the acrylic-based resin film at 23°C is measured by the method disclosed in Examples.

Although the film thickness of the acrylic-based resin film is not particularly limited, it is, for example, 75 µm to 500 um, preferably 75 µm to 300 µm, and more preferably 100 µm to 250 µm. When the film thickness of the acrylic-based resin film is 75 µm to 500 µm, there is an advantage of excellent handling property due to the elasticity appearing in the film. The film thickness of the acrylic-based resin film is measured by the method disclosed in Examples.

The pencil hardness of the surface of the acrylic-based resin film on which surface the hard coat layer is not laminated is preferably B or more and more preferably HB or more in view of being hard to be scratched. The pencil hardness of the surface of the acrylic-based resin film on which surface the hard coat layer is not laminated is measured according to JIS K5600-5-4 by the method disclosed in Examples.

### <Method of producing acrylic-based resin film>

The acrylic-based resin film can be produced by known processing methods. Specific examples of the known processing methods include melting processing method, calendar molding, press molding, and solvent casting. Examples of the melting processing methods include inflation and T-die extrusion. In the solvent casting, after dissolving and dispersing the acrylic resin composition in a solvent, the resultant dispersion slurry (dope) is flowed on a belt-shaped base material in a film-like manner. Then the solvent is volatized from the flowed film-like dope to obtain an acrylic-based resin film.

Among these methods, the melting processing method which does not use a solvent, especially T-die extrusion, is preferable. By applying melting processing method, it is possible to produce a film with little limitation on thickness and excellent surface property with high productivity, and to reduce the burden of the solvent on the natural environment and working environment and to reduce the production cost.

In a case of molding the acrylic resin composition into a film by the melting processing method or the solvent casting, it is preferable to remove environmental foreign bodies, polymerization scales, deteriorated resin, etc. in the acrylic-based resin composition by filtration using a filter or meshes, in terms of improving the appearance quality of the acrylic-based resin film, because such environmental foreign bodies, polymerization scales, deteriorated resin, etc. cause appearance defects of the acrylic-based resin film and foreign bodies inside the acrylic-based resin film.

During film production by melting processing, it is possible to carry out filtration at any timing of one or more of the following: during the preparation of an acrylic resin composition by melting mixture; during the pelletization of a melted acrylic resin composition; and during the film production step with a T-die. In the solvent casting, it is necessary to mix the acrylic resin, the graft copolymer particles (A) and (B) and other components with the solvent, and then carry out the filtration before casting a film.

As such filters and meshes, known filters and meshes can be used without any particular limitation, provided that the filters and the meshes have heat resistance and durability depending on melting processing conditions and have resistance to solvents, dopes, and the like for casting.

In a case of producing an acrylic-based resin film by melting processing, especially for obtaining a high-quality acrylic-based resin film, it is preferable to use a filter that has a large filtration capacity and a low residence of the molten resin, which causes the generation of resin-deteriorated products and crosslinked products that impair the quality of the film. For example, a leaf-disc filter or a pleated filter is preferable in terms of filtration efficiency and productivity.

In a case of producing an acrylic-based resin film by the T-die extrusion, for example, the following automated die machine can be used to improve film thickness accuracy: an automated die machine that measures the film thickness distribution in the TD direction of the extruded and molded film (in the direction perpendicular to the extrusion direction) online and, based on this, automatically adjusts the lip clearance of the T die during extrusion of the film. Applying automated die using an appropriate control method may improve the thickness accuracy of an acrylic-based resin film.

In production of the acrylic-based resin film, when molding the film, if necessary, both sides of the film in the molten state may be caused to contact (may be sandwiched by) cooling rollers or cooling belts to obtain a film having a more excellent surface property. In this case, it is preferable to make both sides of the film in the molten state contact rollers or cooling belts maintained at the glass transition temperature of the acrylic resin composition of not less than -80°C, preferably not less than -70°C.

More preferably, a roller with a metal sleeve having an elasticity, as disclosed, for example, in Japanese Patent Application Publication No. 2000-153547, Japanese Patent Application Publication No. 11-235747 etc. is used as at least one of the rollers for carrying out such sandwiching, and a roller mirror surface or specific surface shape is transferred using a low sandwich pressure. This makes it possible to obtain a film with less internal distortion that has excellent smoothness or moderate surface roughness, excellent slidability of the film surface, and suppressed blocking with another film.

It is also possible to perform, according to the purpose, molding of the film followed by uniaxial or biaxial stretching. Uniaxial or biaxial stretching can be carried out using a known stretching device. It is possible to carry out biaxial stretching in a known manner, such as a method of carrying out sequential biaxial stretching, simultaneous biaxial stretching, and longitudinal stretching and then carrying out lateral stretching while relaxing the longitudinal direction, so as to reduce the bowing of the film.

Furthermore, depending on the necessity of the application, one or both sides of the acrylic-based resin film may be provided with any surface shape, such as a hairline, prism, concave-convex shape, stereo ornament, matted surface, a rough surface with a certain surface roughness, and knurling on the film end. The provision of such a surface shape can be carried out by a known method. Examples of the known method encompass a method in which the surface shape of a roller is transferred by sandwiching both sides of a film in a melting state immediately after extrusion or both sides of a molded film that has been fed from a feeding device with two rollers or belts having a surface shape on at least one surface.

### (Hard coat layer)

The hard coat layer in the present laminate is a functional layer that is laminated on at least one side of the acrylic-based resin film. The hard coat layer may be laminated on one side of the acrylic-based resin film or may be laminated on both sides thereof.

The hard coat layer in the present laminate is preferably a cured product of a resin composition containing a polyfunctional (meth)acrylate and a photopolymerization initiator. The hard coat layer is obtained preferably by curing with a known curing method, such as thermosetting, active energy ray curing, etc. The hard coat layer is obtained more preferably by curing with irradiation with an active energy ray, such as an ultraviolet light.

As the hard coat layer, various ultraviolet-curable hard coat layers that have been conventionally provided in various functional films, molded resin products, etc. may be used without any limitation. The hard coat layer can be formed by curing a composition including, for example, a monomer with a radical reactive functional group, such as polyfunctional (meth)acrylate, epoxy acrylate, urethane acrylate, polyester acrylate, silicone acrylate, polycarbonate acrylate, and polyacrylic acrylate, an oligomer, a resin, or a mixture thereof. Furthermore, the hard coat layer can be formed by curing a composition including, for example, a monomer with a cationic curing or anionic curing functional group such as an epoxy group and an oxethane group, an oligomer, a resin, or a mixture thereof. Furthermore, the hard coat layer can be formed by thermally curing a polysiloxane-based resin in which an alkoxy group-substituted silyl compound is hydrolyzed and partially condensed. Alternatively, the hard coat layer can be formed by introducing a reactive functional group into a silyl compound to allow the reactive functional group to react and be cured. The aforementioned components used for formation of the hard coat layer may be used alone, or two or more of them may be used in combination.

In the above examples of the hard coat layer, the "polyfunctional (meth)acrylate" was discussed separately from epoxy acrylate, urethane acrylate, etc., for convenience of the following description. However, "polyfunctional (meth)acrylate" is a generic term for compounds that contain two or more (meth)acryloyl functional groups in a structure, such as monomers, oligomers, and polymers, and is a concept that includes epoxy acrylate, urethane acrylate, and also a compound that contains any main chain or backbone structure, such as alkyl, alkenyl, aryl, ester, amide, ether, fluoroalkyl, siloxy, and two or more (meth)acryloyl functional groups. That is, when stated as "polyfunctional (meth)acrylate", it is intended to include epoxy acrylate, urethane acrylate, and also a polyvalent (meth)acrylate compound having any structure as discussed above, as would normally be understood by a person skilled in the art.

The polyfunctional (meth)acrylate is not particularly limited as long as it has at least two (meth)acryloyl groups. Specific examples of the polyfunctional (meth)acrylate include dipentaerythritol hexa(meth)acrylate, dipentaerythritol penta(meth)acrylate, dipentaerythritol tetra(meth)acrylate, dipentaerythritol tri(meth)acrylate, pentaerythritol tetra(meth)acrylate, pentaerythritol tri(meth)acrylate, trimethylol propane tri(meth)acrylate, trimethylol ethane tri(meth)acrylate, hexanediol di(meth)acrylate, and diethylene glycol di(meth)acrylate. These may be used alone, or two or more of them may be used in combination. Furthermore, those commercially available as ultraviolet-curable hard coat agents etc. may be used. In the present specification, (meth)acrylate includes methacrylate and acrylate. In the present specification, a (meth)acryloyl group includes a methacryloyl group and an acryloyl group.

The epoxy acrylate-based monomers are not particularly limited. Specific examples of the epoxy acrylate-based monomers include glycidyl (meth)acrylate, β-methylglycidyl (meth)acrylate, 3,4-epoxycyclohexylmethyl (meth)acrylate, and vinylcyclohexene monooxide (i.e., 1,2-epoxy-4-vinylcyclohexane).

The urethane acrylate resin can be obtained, for example, by mixing a polyvalent alcohol, a polyvalent isocyanate and a hydroxyl-containing (meth)acrylate to produce a urethane bond by the reaction of an isocyanate group with a hydroxyl group.

Various properties of the urethane acrylate resin can be adjusted as appropriate depending on the structure of the polyvalent alcohol, the type of polyvalent isocyanate, and the number of acryloyl or methacryloyl groups (CH₂ = CH-CO-, or CH₂ = C(CH₃)-CO-) derived from the hydroxyl-containing (meth)acrylate, and are not particularly limited. Furthermore, urethane acrylate resins commercially available as ultraviolet-curable hard coat agents etc. may be used.

Examples of the hydroxyl group-containing (meth)acrylate include, but not particularly limited to, a hydroxyl group-containing (meth)acrylate such as 2-hydroxyethyl acrylate and 2-hydroxyethyl methacrylate. Besides, as necessary, compounds with an ethylenically unsaturated bond having at least one hydroxyl group, such as 2-hydroxypropyl (meth)acrylate, 4-hydroxybutyl acrylate, polyethylene glycol mono(meth)acrylate, polypropylene glycol mono(meth)acrylate, trimethylpropane mono (meth)acrylate, trimethylol propane di(meth)acrylate, allyl alcohol, ethylene glycol allyl ether, glycerine (mono-, di-)allyl ether, N-methylol (meth)acrylamide or a mixture thereof can be added.

The polyvalent isocyanates are not particularly limited. Examples of the polyvalent isocyanate compound which is a compound with two or more isocyanate groups include, e.g., 2,4-trilenediisocyanate, 2,6-trilenediisocyanate, 1,3-xylilenediisocyanate, 1,4-xylilenediisocyanate, 1,5-naphthalenediisocyanate, m-phenylenediisocyanate, p-phenylenediisocyanate, 3,3'-dimethyl-4,4'-diphenylmethane diisocyanate, 4,4'-diphenylmethandiisocyanate, 4,4'-diphenylmethantriisocyanate, 3,3'-dimethylphenylenediisocyanate, 4,4'-biphenylene diisocyanate, 1,6-hexanediisocyanate, isophorone diisocyanate, methylene bis(4-cyclohexyl isocyanate), 2,2,4-trimethylhexamethylene diisocyanate, bis(2-isocyanate ethyl)fumarate, 6-isopropyl-1,3-phenyl diisocyanate, 4-diphenyl propane diisocyanate, trizine diisocyanate, hydrogenated diphenyl methane diisocyanate, hydrogenated xylilene diisocyanate, tetramethyl xylene diisocyanate, 2,5-bis(isocyanate methyl)-bicyclo[2.2.1]heptane, 2,6-bis(isocyanate methyl)-bicyclo[2.2.1]heptane, trimethylol propane adduct of triethylene diisocyanate, isocyanurate of triethylene diisocyanate, an oligomer of diphenylmethane-4,4'-diisocyanate, biuret of hexamethylene diisocyanate, isocyanurate of hexamethylene diisocyanate, uretdione of hexamethylene diisocyanate, and isocyanurate of isophorone diisocyanate. These polyisocyanates may be used alone or two or more of them may be used in combination.

Specific examples of the polyvalent alcohols include ethylene glycol, 1,3-propanediol, 1,4-butanediol, 1,5-pentanediol, 1,6-hexanediol, 1,7-heptanediol, 1,8-octanediol, 1,9-nonandiol, 1,10-decanediol, 3-methyl-1,5-pentanediol, neopentylglycol, 2-methyl-1,8-octanediol, 1,4-cyclohexanedimethanol, and polytetramethylene glycol. These polyvalent alcohols may be used alone or two or more of them may be used in combination.

An organotin-based urethanization catalyst is used to facilitate the reaction between the isocyanate component and the isocyanate group. The organotin-based urethanization catalyst may be one commonly used for urethanization, and examples thereof include dibutyltin dilaurate, dibutyltin diacetate, dibutyltin dialkylmalate, tin stearate, tin octylate, and the like. Although the amount of these organotin-based urethanization catalysts used is not particularly limited, it is appropriate to use them within a range of not less than 0.005% by mass and not more than 3% by mass. The urethane reaction does not progress sufficiently when the amount is under the lower limit, and the reaction control becomes difficult due to the exothermic heat during the urethane reaction when the amount is more than the upper limit.

A composition for hard coat formation consisting of a polysiloxane-based resin composition is preferably a curable composition represented by the following general formula (2), comprising a condensate (A) obtained by hydrolyzing and condensing a silane compound (2) with a hydrolyzable silyl group, and a catalyst or curing agent (B) that reacts a reactive substituent:

R⁴-(SiR⁵ₐ(OR⁶)₃₋ₐ) ... (2)

wherein R⁴ is a monovalent hydrocarbon group selected from the group consisting of: an alkyl group having not less than 1 and not more than 10 carbon atoms; an aryl group having not less than 6 and not more than 25 carbon atoms; and an aralkyl group having not less than 7 and not more than 12 carbon atoms, wherein at least a part of terminals thereof is substituted with a reactive substituent selected from the group consisting of an epoxy group, an oxethane group, a (meth)acryloyl group, a vinyl group, a hydroxyl group, a carboxyl group, an amino group, and a functionally protected amino group, wherein R⁵ are independently a monovalent hydrocarbon group selected from the group consisting of: a hydrogen group; an alkyl group having not less than 1 and not more than 10 carbon atoms; an aryl group having not less than 6 and not more than 25 carbon atoms; and an aralkyl group having not less than 7 and not more than 12 hydrocarbon atoms, and wherein R⁶ are independently a hydrogen atom or an alkyl group having not less than 1 and not more than 10 carbon atoms, and "a" is an integer of not less than 0 and not more than 2.

Preferably, the weight average molecular weight of the condensate (A) is not more than 30,000. In addition, it is preferable that the usage rate of the silane compound having a reactive substituent is not less than 10% by mass with respect to the whole amount. In this case, the cured product as a hard coat layer has excellent hardness, chemical resistance, durability etc.

The catalyst or curing agent (B) is preferably one or more catalysts or curing agents selected from a photo radical generator, a photo cation generator, and a photo anion generator in view of the photo curability of the composition.

The reactive substituent in general formula (2) is preferably an epoxy group or an oxetane group because it has less curing contraction during hard coat layer formation and it is easy to obtain a functional film with excellent durability and suppressed curling.

It is more preferable to use a neutral salt catalyst as a catalyst in carrying out the hydrolytic condensation reaction of the silane compound (Z). This is because when the reactive substituent is an epoxy group or an oxetane group, it is easy to suppress the degradation of the reactive substituent during hydrolytic condensation.

A ratio Q/P, wherein P is the number of moles of the OR⁶ group directly bonded to a silicon atom of the silane compound (Z) which is a raw material of the condensate (A), and Q is the number of moles of the OR⁶ group directly bonded to a silicon atom of the condensate (A), is preferably not more than 0.2. This is because the cured product has excellent hardness, chemical resistance, durability etc.

The method for curing the resin composition when forming the hard coat layer may be known one. The curing method is preferably a method of irradiation with an active energy ray, a representative of which is an ultraviolet light. When curing is carried out by irradiation with an active energy ray, it is usual to add a photopolymerization initiator, a photo anion generator, and a photo cation generator, etc. to a composition for formation of a hard coat layer.

Specific examples of the photopolymerization initiator include: acetophenone, benzophenone, benzoylmethyl ether, benzoylethyl ether, benzoin isopropyl ether, benzoin isobutyl ether, dibenzyl, 1-hydroxy-cyclohexyl-phenyl-ketone, 2,2-dimethoxy-2-phenylacetophenone, tetramethylthiuram monosulfide, tetramethylthiuram disulfide, thioxanthone, 2-chlorothioxanthone, 2-methylthioxanethone, and 2-methyl-1-[4-(methylthio)phenyl]-2-morpholinopropan-1-one compound etc. Among them, 1-hydroxy-cyclohexyl-phenyl-ketone which has excellent compatibility with resin is preferable.

Specific examples of the photo cation generator include: CPI-100P, CPI-101A, CPI-200K, and CPI-200S, each manufactured by San Apro; WPI-124, WPI-113, WPI-116, WPI-169, WPI-170, and WPI-124, each manufactured by Wako Pure Chemical Industries, Ltd.; and Rhodorsil 2074 manufactured by Rhodia, S.A.

Specific examples of the photoanion generate include: acetophenone o-benzoyloxium, nifedipine, 2-(9-oxoxanthen2-yl)propionic acid 1,5,7-triazabicyclo(4.4.0)deca-5-en, 2-nitrophenylmethyl 4-methacryloyl oxypiperidine-1-carboxylate, 1,2-diisopropyl-3-(bis(dimelamino)methylene)guanidium 2-(3-benzoylphenyl) propionate, 1,2-dicyclohexyl-4,4,5,5-tetramethylpiguanidium, and n-butyltriphenylbalate.

In a case where the hard coat layer is formed by curing a coating film consisting of a curable composition, known leveling agents may be blended in the curable composition for the purpose of improving coatability, abrasion resistance after curing, antifouling property, etc. As the leveling agent, a fluorine-based leveling agent, an acrylic-based leveling agent, a silicone-based leveling agent, and adducts or mixtures thereof may be used. The amount of the leveling agent is not specifically limited, and may be, for example, not less than 0.03 parts by mass and not more than 3.0 parts by mass with respect to 100 parts by mass of the curable composition.

In a case of forming the hard coat layer by applying a curable composition, various types of additives, such as ultraviolet absorbing agents, light stabilizers, defoaming agents, antioxidants, light diffusing agents, matting agents, antifouling agents, lubricants, colorants (e.g. pigments and dyes), organic particles, inorganic fine particles, and anti-static agents, may be added to the curable composition as necessary. The additives are not limited to these.

In order to give adequate coatability to the curable composition, an organic solvent is usually blended. The organic solvent is not particularly limited as long as it can give desired coatability to the curable composition and a hard coat layer with a desired film thickness and performances can be formed. The boiling point of the organic solvent is preferably not less than 50°C and not more than 150°C in terms of coatability and dryness of the coating film to be formed.

Specific examples of the organic solvent include: saturated hydrocarbons such as hexane; aromatic hydrocarbons such as toluene and xylene; halogenated hydrocarbons such as chloroform and methylene chloride; alcohols such as methanol, ethanol, isopropyl alcohol, and butanol; esters such as methyl acetate, ethyl acetate, and butyl acetate; ketones such as acetone, methyl ethyl ketone, methyl isobutyl ketone, and cyclohexanone; ethers such as tetrahydrofuran, dioxane, propylene glycol monoethyl ether, methylcellosolve, and ethyl cellosolve; and amides such as N methylpyrrolidone and dimethylformamide. The organic solvent may be used alone, or two or more of them may be used in combination.

In a case of applying a curable composition onto the main surface of the aforementioned acrylic-based resin film which is a base material film, any method of application may be employed without particular limitation. Examples of the application method include reverse coating, gravure coating, bar coating, die coating, spray coating, kiss coating, wire bar coating, and curtain coating. These application methods may be carried out alone or a plurality of them may be carried out in combination.

The above-described curable composition for hard coat layer formation is applied on the surface of the aforementioned acrylic-based resin film which is a base material film, and subsequently the organic solvent is removed from the coating film by drying and the resultant is cured by ultraviolet irradiation to form a hard coat layer.

The drying temperature for the coating film when removing the organic solvent by drying is preferably not less than 60°C and not more than 120°C, and more preferably not less than 70°C and not more than 100°C. When the drying temperature is too low, the organic solvent may remain in the coating film. When the drying temperature is too high, the flattening of the functional film (hard coat layer) may be impaired due to thermal deformation of the base material film.

The wavelength of the ultraviolet light with which the coating film is to be irradiated when the coating film is cured is preferably in the range of not less than 200 nm and not more than 400 nm. For the cumulative amount of ultraviolet light (UV), the condition described in (4. Manufacturing Method of Laminate) mentioned later is preferably used. As the device for radiating ultraviolet exposure light, an irradiation device having: a lamp light source such as a highpressure mercury lamp, a low-pressure mercury lamp, a metal halide lamp, an electrode-free lamp, and an excimer lamp; and a pulse or continuous laser light source such as an argon ion laser and a helium neon laser etc. may be used.

Since heat is generated and the temperature rises during ultraviolet light irradiation, it is preferable to carry out ultraviolet light irradiation while cooling by lowering the temperature of the roller. For the cooling roller temperature in this case, the condition described in (4. Manufacturing Method of Laminate) mentioned later is preferably used.

The composition for hard coat layer formation may be a commercially available one such as "Z-879" manufactured by Aica Kogyo Co. Ltd., "Unidic ESS108" manufactured by DIC Corporation, "NSC-7312" manufactured by Dainichiseika Color & Chemicals Mfg. Co., Ltd., "Beamset 575" manufactured by Arakawa Chemical Industries, Ltd., "UV-1700B" manufactured by Nippon Synthetic Chemical Industry Co. Ltd., "8BR-600" manufactured by Taisei Fine Chemical Co., Ltd., and "FA-3280H" manufactured by Nippon Kako Toryo Co., Ltd. Since it has elongation even after curing, it is possible to further increase crack elongation of the present laminate at 120°C.

Although the film thickness of the hard coat layer is not particularly limited, it is, for example, 0.6 µm to 10.0 µm, preferably 0.7 um to 7.0 µm, and more preferably 0.8 µm to 5.0 µm. The hard coat layer having a film thickness of 0.6 µm to 10.0 µm has an advantage that it can attain both of wear resistance and moldability. The film thickness of the hard coat layer is measured by the method disclosed in Examples.

In an embodiment of the present invention, inorganic particles or metal particles may be added to improve the wear resistance etc. of the hard coat layer. Examples of the inorganic particles and metal particles include, but are not limited to, silica, alumina, titanium oxide, zinc oxide, zirconia, graphene, nanocarbon, carbon black, nanodiamond, mica, barium titanate, boron nitride, metal silver, and metal copper. These particles may be used without a surface treatment. Alternatively, these particles may be subjected to a surface treatment by a known method in advance for the purpose of controlling a dispersion state such that the affinity with the hard coat layer is controlled as appropriate.

### <Other functional layers>

The present laminate may have other functional layers in addition to the hard coat layer. Examples of such other functional layers are not particularly limited, and may be a variety of previously known functional layers. Specific examples of the functional layer include an antireflection layer, an anti-dazzling layer, an antifouling layer, an anti-fingerprint layer, a scratch and/or mar resistant layer, an anti-static layer, an ultraviolet light shielding layer, an infrared shielding layer, a surface concave layer, a light diffusion layer, a matting layer, a light-polarizing layer, a coloring layer, a design layer, an emboss layer, a conductive layer, a gas barrier layer, and a gas absorbing layer. Two or more types of such a functional layer may be included in combination. Alternatively, a single type of such a functional layer may have two or more functions. The antireflection layer may be constituted by a low-refractive index layer, or may be constituted by both a high-refractive index layer and a low-refractive index layer, or may be constituted by forming, on the surface of the functional layer, a surface concave and convex shape which is finer than the wavelength of visible light.

### (Laminate)

As described above, the present laminate is constituted by a specific acrylic-based resin film and a specific hard coat layer and is excellent in moldability and wear resistance.

The crack elongation of the present laminate at 120°C is 50% or more, preferably 52% or more, and more preferably 54% or more. When the crack elongation of the present laminate at 120°C is not less than 50%, it has the advantage that no crack occurs during molding. The crack elongation of the present laminate at 120°C is measured by the method described in Examples.

The present laminate, when subjected to a steel wool wear test at 50 g/cm² with 5 reciprocating motions, shows Δhaze of not more than 1.0%, preferably not more than 0.8%, and more preferably not more than 0.6%. When Δhaze shown in the steel wool wear test at 50 g/cm² with 5 reciprocating motions is not more than 1.0%, the present laminate has an advantage of being scratch and/or mar resistant when wiped. The Δhaze of the steel wool wear test at 50 g/cm² with 5 reciprocating motions is measured by the method disclosed in Examples.

The present laminate, when subjected to a steel wool wear test at 50 g/cm² with 10 reciprocating motions, shows Δhaze of, for example, not more than 1.0%, preferably not more than 0.9%, and more preferably not more than 0.8%. When Δhaze shown in the steel wool wear test at 50 g/cm² with 10 reciprocating motions is not more than 1.0%, the present laminate has an advantage of being scratch and/or mar resistant when wiped. The Δhaze of the steel wool wear test at 50 g/cm² with 10 reciprocating motions is measured by the method disclosed in Examples.

The pencil hardness of the present laminate, is, in view of scratch and/or mar resistance, preferably H or more and more preferably 2H or more. The pencil hardness of the present laminate is measured by the method disclosed in Examples.

The above "steel wool wear test" and "pencil hardness" are both indicators of wear resistance. With the "steel wool wear test", wear resistance is evaluated by means of scratches and/or mars when wiped. With the "pencil hardness", wear resistance is evaluated by means of scratches and/or mars when scratched. It is preferable that the present laminate exhibits an effect with respect to each of the indicators.

The phase difference (Re) of the present laminate is, for example, not more than 38 nm, preferably not more than 30 nm, more preferably not more than 20 nm, even more preferably not more than 10 nm, and particularly preferably not more than 8 nm. When the phase difference (Re) is not more than 38 nm, the decrease in contrast of a liquid crystal display device can be suppressed. The phase difference(Re) is measured by the method disclosed in Examples.

The phase difference (Rth) of the present laminate is, for example, not more than | 30 | nm, preferably not more than | 20 | nm, more preferably not more than | 10 | nm. When the phase difference (Rth) is not more than | 30 | nm, the decrease in contrast of a liquid crystal display device can be suppressed. The phase difference (Rth) is measured by the method disclosed in Examples.

ΔE (color difference) after the weather resistance test of the present laminate is, for example, not more than 5.2%, preferably not more than 4.0%, and more preferably not more than 3.0%. The ΔE after the weather resistance test being not more than 5.2% provides an advantage of excellent long-term durability. The ΔE of the weather resistance test is measured by the method disclosed in Examples.

The molding-achievable curvature radius of the present laminate is, for example, not more than 1 mm, preferably not more than 0.8 mm, more preferably not more than 0.6 mm. The molding-achievable curvature radius of not more than 1 mm provides an advantage that the laminate is moldable even when it has a complex shape. The molding-achievable curvature radius is measured by the method disclosed in Examples.

The present laminate may have a primer layer on the opposite side to the side with the hard coat layer. As the composition of the primer layer, ink used for printing carried out in the post-processing step and a resin with good adhesiveness with metals used for metal deposition are used. Examples of the composition of the primer layer include urethane-based resin, acrylic-based resin, polyester-based resin, polycarbonate, epoxy-based resin, melamine-based resin, and a copolymer of vinyl acetate and vinyl chloride. By providing the primer layer, it is possible to strengthen the adhesiveness to the ejected resin, ink, etc.

The thickness of the primer layer is preferably 0.5 um to 10 µm, more preferably 0.5 um to 5 um, most preferably 0.5 µm to 3 µm. When the thickness of the primer layer is not less than 0.5 µm, the adhesiveness can be ensured, and when the thickness of the primer layer is not more than 10 µm, the productivity is better.

### [3. Molded Product]

In an embodiment of the present invention, a molded product (hereinafter referred to as "present molded product"), including the present laminate, is provided.

Specific examples of applications of the present molded product include: applications for automobile interiors, such as an instrument panel, an on-vehicle display front panel, a console box, a meter cover, a door lock pezel, a steering wheel, a power window switch base, a center cluster, and a dashboard; applications for automobile exteriors, such as a weather strip, a bumper, a bumper guard, a side mud guard, a body panel, a spoiler, a fronrill, a strut mount, a wheel cap, a center pillar, a door mirror, a center ornament, a side mall, a door mall, and a window mall etc., a window, a head lamp cover, a tail lamp cover, and a windproof component; housings, display windows, buttons etc. of mobile electronic devices such as smart phones, mobile phones, and tablets; home electronic and electric devices such as televisions, DVD players, stereo units, rice cookers, washing machines, refrigerators, air conditioners, steamers, dehumidifiers, electric fans etc.; applications for housings, front panels, buttons, emblems, surface decorative members of furniture products etc., and applications for exterior materials of furniture; applications for building interior materials such as ceilings, floors, bathtubs, and toilet seats; applications for building exterior materials such as exterior walls (e.g. siding), fences, roofs, gates, and gable boards; applications for surface decorative materials of furniture such as panes, doors, handrails, thresholds, and head jambs; applications for optical components such as displays, lenses, mirrors, goggles, and windows; and applications for interiors and exteriors of vehicles other than automobiles, such as trains, aircrafts, and ships.

Use of the present laminate makes it possible to easily produce a molded product which has a complex three-dimensional shape and excellent appearance with controlled surface hardness, abrasion resistance, chemical resistance, antifouling property, reflection property, and anti-dazzling property. For this reason, the present molded product is preferably used for, among the above applications, for example, an on-vehicle display front panel with a planar or curved shape and a three-dimensional shape. Therefore, in an embodiment of the present invention, an on-vehicle display front panel including the present molded product is provided.

### [4. Method of Producing Laminate]

An embodiment of the present invention provides a production method for laminate which includes acrylic-based resin film and a hard coat layer laminated on at least one side of acrylic-based resin film. The present laminate production method includes a curing step of said hard coat layer carried out on a cooling roller by UV irradiation on the hard coat layer applied to at least one side of the acrylic-based resin film, a cumulative amount of UV light in the UV irradiation being 150 mJ/cm² to 500 mJ/cm², the cooling roller having a temperature of 25°C to 70°C, the acrylic-based resin film having a glass transition temperature of not higher than 140°C and an elongation at break of not less than 200% at 120°C, and the laminate exhibiting a crack elongation of not less than 50% at 120°C and a Δhaze of not more than 1.0% in a steel wool wear test at 50 g/cm² and 5 reciprocating motions.

In the present laminate production method, the cumulative amount of ultraviolet (UV) light is, for example, 150 mJ/cm² to 500 mJ/cm², preferably 160 mJ/cm² to 480 mJ/cm², and more preferably 170 mJ/cm² to 460 mJ/cm². In a case where the cumulative amount of UV light is 150 mJ/cm² to 500 mJ/cm², it is possible to obtain suitable hardness of the hard coat layer while ensuring moldability.

In the present laminate production method, the cooling roller temperature is, for example, 25°C to 70°C, preferably 30°C to 70°C, more preferably 35°C to 70°C, even more preferably 40°C to 70°C, particularly preferably 42°C to 68°C, and especially preferably 45°C to 65°C. In a case where the cooling roller temperature is 25°C to 70°C, it is possible to cure the hard coat layer while suppressing a temperature increase during ultraviolet irradiation. This makes it possible to produce a laminate having desired physical properties.

The present laminate production method can include the step of applying a curable composition for forming the hard coat layer to the surface of the acrylic-based resin film which is a base film and the step of removing the organic solvent from the applied coat layer by drying before the step of curing the hard coat layer.

For any matters other than the above conditions in the present laminate production method, the description in [2. Laminate] above is employed.

### [5. Method of Producing Molded Product]

An embodiment of the present invention provides a molded product production method including the step of shaping the following laminate with a molding temperature during preforming being not higher than 140°C:
the laminate including an acrylic-based resin film and a hard coat layer that is laminated on at least one side of the acrylic-based resin film,
the acrylic-based resin film having a glass transition temperature of not higher than 140°C and an elongation at break of not less than 200% at 120°C, and
the laminate exhibiting a crack elongation of not less than 50% at 120°C and a Δhaze of not more than 1.0% in a steel wool wear test at 50 g/cm² and 5 reciprocating motions.

In the present molded product production method, the film is shaped by preforming at a temperature not higher than 140°C. Since the present laminate includes the specific acrylic-based resin film described above, molding at a low temperature is possible when resins are laminated-molded in the present laminate.

In the present molded product production method, the temperature during the preforming is, for example, not higher than 140°C, preferably not higher than 130°C, and more preferably not higher than 120°C. In a case where the temperature during preforming is not higher than 140°C, the advantage of making cracks in the hard coat layer less likely can be brought about. In addition, in terms of shape-imparting property, the temperature is, for example, not lower than 100°C and preferably not lower than 105°C, although the lower limit is not particularly limited.

Examples of the resin used in injection molding encompass, but are not particularly limited to, a thermoplastic resin or a curable resin. Examples of the thermoplastic resin encompass a polycarbonate resin having, for example, a bisphenol-based skeleton, a fluorene-based skeleton, or an isosorbide-based skeleton, acrylic-based resin, a styrene-based resin (such as AS resin, ABS resin, MAS resin, a styrene maleimide-based resin, a styrene maleic anhydride resin), a saturated polyester resin, a polyvinyl chloride resin, a polyarylate resin, a PPS-based resin, a POM-based resin, a polyamide resin, a polylactic acid resin, a cellulose acylate-based resin, and a polyolefin-based resin. Examples of the curable resin encompass an epoxy resin, a vinyl ester resin, an unsaturated polyester resin, a phenol-based resin, a melamine-based resin, and benzoxazine resin. Among the above, a resin having transparency is preferably used, such as a polycarbonate resin, an acrylic-based resin, a styrene-based resin, a polyarylate resin, a polyacrylate resin, and a polyolefin-based resin.

In an embodiment of the present invention, the present molded product may be produced by preforming the printed present laminate at a temperature of not higher than 140°C (curved surface molding) in advance, placing the laminate in a mold after trimming, and then injection molding and integrating the resin.

For any matters other than the above conditions in the present molded product production method, the description in [2. Laminate] above is employed.

The present invention is not limited to the embodiments, but can be altered by a skilled person in the art within the scope of the claims. The present invention also encompasses, in its technical scope, any embodiment derived by combining technical means disclosed in differing embodiments.

Specifically, embodiments of the present invention are as follows.
<1> A laminate including: an acrylic-based resin film; and a hard coat layer that is laminated on at least one side of the acrylic-based resin film,
   the acrylic-based resin film having a glass transition temperature of not higher than 140°C and an elongation at break of not less than 200% at 120°C, and
   the laminate exhibiting a crack elongation of not less than 50% at 120°C and a Δhaze of not more than 1.0% in a steel wool wear test at 50 g/cm² and 5 reciprocating motions.
<2> The laminate described in <1>, in which the laminate has at least one selected from the group consisting of the following physical properties:
   a phase difference (Re) is not more than 38 nm; and
   a ΔE after a weather resistance test is not more than 5.2%.
<3> The laminate described in <1> or <2>, in which the hard coat layer is a cured product of a resin composition containing a polyfunctional (meth)acrylate and a photopolymerization initiator.
<4> The laminate described in any one of <1> through <3>, in which: the acrylic-based resin film contains 1% by mass to 70% by mass of graft copolymer particles (A) having an average particle size of 20 nm to 200 nm and not more than 20% by mass of graft copolymer particles (B) larger in average particle size than the graft copolymer particles (A); and the acrylic-based resin film contains a crosslinked elastomer (A1) and a crosslinked elastomer (B1) in a total amount of not more than 15% by mass.
<5> The laminate described in <4>, in which the graft copolymer particles (B) have an average particle size of not less than 150 nm and are contained in an amount of 1% by mass to 10% by mass.
<6> The laminate described in any one of <1> through <5>, in which a surface of the acrylic-based resin film, on which surface the hard coat layer is not laminated, has a pencil hardness of B or more and the acrylic-based resin film has an elongation at break of not less than 20% at 23°C.
<7> The laminate described in any one of <4> through <6>, in which the graft copolymer particles (A) contain a reactive ultraviolet absorber in an amount of 0.01% by mass to 5% by mass.
<8> A molded product including a laminate described in any one of <1> through <7>.
<9> An on-vehicle display front panel including a molded product described in <8>.
<10> A production method for laminate which includes acrylic-based resin film and a hard coat layer laminated on at least one side of acrylic-based resin film,
   said method including a curing step of said hard coat layer carried out on a cooling roller by UV irradiation on the hard coat layer applied to at least one side of the acrylic-based resin film,
   a cumulative amount of UV light in the UV irradiation being 150 mJ/cm² to 500 mJ/cm²,
   the cooling roller having a temperature of 25°C to 70°C,
   the acrylic-based resin film having a glass transition temperature of not higher than 140°C and an elongation at break of not less than 200% at 120°C, and
   the laminate exhibiting a crack elongation of not less than 50% at 120°C and a Δhaze of not more than 1.0% in a steel wool wear test at 50 g/cm² and 5 reciprocating motions.
<11> A method of producing a molded product, including the step of shaping the following laminate with a molding temperature during preforming being not higher than 140°C:
   the laminate including an acrylic-based resin film and a hard coat layer that is laminated on at least one side of the acrylic-based resin film,
   the acrylic-based resin film having a glass transition temperature of not higher than 140°C and an elongation at break of not less than 200% at 120°C, and
   the laminate exhibiting a crack elongation of not less than 50% at 120°C and a Δhaze of not more than 1.0% in a steel wool wear test at 50 g/cm² and 5 reciprocating motions. Examples

The following description will discuss the present invention in more detail with reference to Examples. However, the present invention is not limited to these Examples.

### [Measurement and evaluation methods]

In Examples and Comparative Examples, measurement and evaluation were carried out by the following methods.

### (Glass transition temperature (Tg))

A differential scanning calorimeter (DSC) SSC-5200 manufactured by Seiko Instruments Inc. was used. Measurement was carried out over a period during which a preliminary adjustment (the temperature of a sample was raised to 200°C at a rate of 25°C/min and then kept for 10 minutes, and the temperature was lowered to 50°C at a rate of 25°C/min) was carried out and then the temperature was raised to 200°C at a rate of 10°C/min. Derivative values were obtained from the DSC curve (SSDC), and a glass transition temperature was obtained from the maximum point of the derivative values.

### (Elongation at tensile fracture)

A laminated films of 10 mm (width) x 100 mm (length) was cut out. With use of a Tensilon tensile testing machine (AG-2000D; Shimadzu Corporation) to which a high-temperature bath set at 120°C was attached, measurement was carried out under the following conditions: a residual heat time of 2 minutes, a chuck-to-chuck distance of 50 mm, and a tensile speed of 200 mm/min. The elongation at which the laminated film broke was determined as an elongation at tensile fracture.

The value of the elongation at tensile fracture is an average value obtained by excluding the highest value and the lowest value from the measurement results obtained using five test pieces.

### (Crack elongation)

The measurement of crack elongation was carried out on a laminated film (HC layer formation), on one surface of which a hard coat layer was formed. Specifically, a laminated films of 10 mm (width) x 100 mm (length) was cut out. With use of a Tensilon tensile testing machine (AG-2000D; Shimadzu Corporation) to which a high-temperature bath set at 120°C was attached, measurement was carried out under the following conditions: a residual heat time of 2 minutes, a chuck-to-chuck distance of 50 mm, and a tensile speed of 200 mm/min. The measurement was carried out with on the assumption that an elongation when a crack occurred in the hard coat layer is a 120°C crack elongation. The average values of the test results obtained by carrying out the measurements on the three samples are shown in Tables 5 and 6.

### (Molding-achievable curvature radius)

A vacuum pressure molding machine (NGF-406-S; manufactured by Fu-se Vacuum Forming Ltd.) was used. The molding machine consisted of upper and lower parts. The lower part was provided with a mold with a plurality of protrusions having R (curvature radius) of 0.3, 0.5, 0.8, 1.0, 1.5, 2.0, 2.5, and 3.0 and having a height of 3 mm. The upper part was provided with a laminated film. Subsequently, the upper and lower parts were both depressurized to -100 kPa, and the laminated film was heated with an infrared heater that had been provided on the upper part. The laminated film was pressed against the molding when the laminated film was heated to 120°C in Examples 1 through 12, Comparative Examples 1 through 4, and Comparative Examples 8 through 12, and to 160°C in Comparative Examples 5 through 7. Subsequently, compressed air was introduced to the upper part to achieve 300 kPa, and molding was carried out. "Good" means that no cracks were on the protrusions. "Fair" means that cracks were on part of the peripheries of the protrusions, and "Bad" means that cracks were on the entire circumferences of the protrusions.

### (Wear test)

A surface property measuring instrument, HEIDON Type 14DR (manufactured by Shinto Scientific Co., Ltd.) was used. Steel wool #0000 was mounted on a gauge head having a diameter of 1 mm, and a 50 g weight was placed. Steel wool was placed on the hard coat side of the laminated film, and 5-reciprocation and 10-reciprocation tests were carried out at a stroke of 50 mm and a speed of 6000 mm/min. The haze was measured before and after the tests. The haze was measured using the haze meter NDH4000 (manufactured by Nippon Denshoku Industries Co., Ltd.) in accordance with ISO 14782.

### (Phase difference)

From the film, a 40 mm x 40 mm test piece was cut out. With use of an automatic double refractometer (KOBRA-WR; manufactured by Oji Scientific Instruments), at a temperature of 23±2°C and a humidity of 50±5%, the in-plane phase difference Re and the thickness-direction phase difference Rth of the test piece were measured at a wavelength of 590 nm and an incidence angle of 0°.

### (Weather resistance test)

Suga SX2D-75 (manufactured by Suga Test Instruments Co., Ltd.) was used. The irradiation intensity was set to 180 (W/m2, 300 nm to 400 nm), the black panel temperature was set to 83±3°C, and the relative humidity was set to 50±5%. The glass filter was configured such that quartz was used for the inside, and polysilicate #275 was used for the outside. The test was carried out for 500 hours. The color difference (ΔE) was measured before and after the test. ΔE was measured with a spectrophotometer, SE7700 (manufactured by Nippon Denshoku Industries Co., Ltd.).
The mode was set to "permeable", the light source was D65, the viewing field was 2°, and the measurement diameter was 28 mm.

### (Film thickness)

The thickness of the acrylic-based resin film was measured with the PEACOCK dial gauge No. 25 (manufactured by Ozaki Manufacturing Co., Ltd.).

The film thickness of the hard coat layer was measured with an F20 film thickness measurement system (manufactured by Filmetrics Japan, Inc.). The side opposite from the hard coat layer was painted in black with a felt-tip pen, and the measurement was carried out with the refractive index of the acrylic-based resin film being set to 1.49 and the refractive index of the hard coat layer being set to 1.50.

### (Pencil hardness)

The pencil hardness was measured in accordance with JIS K5600-5-4. An electric pencil hardness tester (manufactured by MYS-TESTER Company Limited) was used to test five pencils at a load of 750 g and a rate of 60 mm/min. When the number of scratches was not more than one, it was determined "acceptable".

The pencil hardness measurement was carried out on the hard coat layer of the functional film.

### [Production Example 1: Graft copolymer particles (A)]

The following substances were introduced into an 8-L polymerization device with a stirrer:
- 200 parts of deionized water
- 0.24 parts of sodium dioctyl sulfosuccinate
- 0.15 parts of sodium formaldehyde sulfoxylate
- 0.001 parts of ethylenediaminetetraacetic acid-2-sodium
- 0.00025 parts of ferrous sulfate

The gas inside the polymerization device was sufficiently replaced with nitrogen gas so that a substantially oxygen-free state was obtained. Then, the internal temperature of the polymerization device was set to 60°C. Then, 30 parts of the following monomer mixture was continuously added to the polymerization device at a rate of 10 parts by mass/time. After the addition ended, the polymerization was continued for an additional 0.5 hours so that crosslinked elastomer (A1) particles (average particle size: 90 nm) were obtained. The polymerization conversion rate was 99.5%.

Monomer mixture:
- 30 parts of a vinyl monomer mixture (90% n-butyl acrylate (BA) and 10% methyl methacrylate (MMA))
- 1 part of allyl methacrylate (AlMA)
- 0.2 parts of cumene hydroperoxide (CHP)

Subsequently, 0.05 parts by mass of sodium dioctyl sulfosuccinate were introduced into the polymerization device. Then, the internal temperature of the polymerization device was set to 60°C, and 70 parts of the monomer mixture containing 70 parts (98% MMA, 1% BA, and 1% RUVA) of the vinyl monomer mixture for forming the graft polymer layer (A2), 0.5 parts of tertiary dodecyl mercaptan (t-DM), and 0.5 parts of CHP) were continuously added to the polymerization device at a rate of 10 parts/hour. The polymerization was continued for another 1 hour, so that graft copolymer particles (average particle size: 90 nm) were obtained. The polymerization conversion rate was 98.2%. The latex obtained was subjected to salting out and was flocculated with calcium chloride. Then, the solid content after the flocculation was rinsed with water and dried, so that the powder of graft copolymer particles (A) was obtained. The amount of each component is shown in Table 1.

RUVA is a reactive ultraviolet absorber (2-(2'-hydroxy-5'-methacryloyloxyethylphenyl)-2-H-benzotriazole (RUVA-93; manufactured by Otsuka Chemical Co., Ltd.)).

### [Production Example 2: Graft copolymer particles (A)]

The following substances were introduced into an 8-L polymerization device with a stirrer:
200 parts of deionized water
0.25 parts of sodium dioctyl sulfosuccinate
0.15 parts of sodium formaldehyde sulfoxylate
0.001 parts of ethylenediaminetetraacetic acid-2-sodium
0.00025 parts of ferrous sulfate

The gas inside the polymerization device was sufficiently replaced with nitrogen gas so that a substantially oxygen-free state was obtained. Subsequently, the internal temperature was set to 60°C, and the mixed solution of (i) a monomer mixture containing 27 parts of n-butyl acrylate, 3 parts of methyl methacrylate, and 0.9 parts of allyl methacrylate and (ii) 0.2 parts of cumene hydroperoxide was continuously added over 3 hours. After the addition ended, the polymerization was continued for another 0.5 hours, so that rubber particles were obtained. The polymerization conversion rate was 99.5%.

Subsequently, 0.05 parts of sodium dioctyl sulfosuccinate were introduced. Subsequently, the internal temperature was set to 60°C, and a mixed solution of (i) a monomer mixture containing 7 parts of n-butyl acrylate and 63 parts of methyl methacrylate and (ii) 0.2 parts of cumene hydroperoxide was continuously added over 5 hours. The polymerization was continued for another 1 hour, so that a graft copolymer particle latex was obtained. The polymerization conversion rate was 98.5%. The latex obtained was subjected to salting out and was flocculated with calcium chloride, and rinsed with water and dried, so that graft copolymer particles (A) in a white powder form were obtained. The amount of each component is shown in Table 1.

The average particle size of the rubber particles of the graft copolymer particles (A) was 80 nm.

**[Table 1]**

| | | Production Example 1 | Production Example2 |
|---|---|---|---|
| Rubber part | MMA | 3 | 3 |
| | BA | 27 | 27 |
| | Allyl methacrylate (ALMA) | 1 | 0.9 |
| | Cumene hydroperoxide | 0.2 | 0.2 |
| Shell part | MMA | 68.6 | 63 |
| | BA | 0.7 | 7 |
| | RUVA | 0.7 | 0 |
| | Tertiary dodecyl mercaptan | 0.5 | |
| | Cumene hydroperoxide | 0.5 | 0.2 |
| Rubber part particle size | nm | 90 | 80 |

### [Production Example 3: Graft copolymer particles (B)]

The following substances were introduced into an 8-L polymerization device with a stirrer:
·180 parts of deionized water
· 0.002 parts of polyoxyethylene lauryl ether phosphate
· 0.4725 parts of boric acid
· 0.04725 parts of sodium carbonate
· 0.0098 parts of sodium hydroxide

The gas inside the polymerization device was sufficiently replaced with nitrogen gas so that a substantially oxygen-free state was obtained. Then, the internal temperature of the polymerization device was set to 80°C. 0.027 parts of potassium persulfate was placed as a 2% aqueous solution in the polymerization device. Then, a mixed solution containing 27 parts of a vinyl monomer mixture (97% MMA and 3% BA) and 0.036 parts of allyl methacrylate was continuously added to the polymerization device over 81 minutes.

By continuing the polymerization for an additional 60 minutes, particles of the polymer that serve as the first layer of the core (crosslinked elastomer (B1)) were obtained. The polymerization conversion rate was 99.0%.

Subsequently, 0.0267 parts of sodium hydroxide as a 2% aqueous solution was added to the polymerization device. Then, 0.08 parts of potassium persulfate as a 2% aqueous solution was added to the polymerization device. Subsequently, a mixed solution containing 50 parts of a vinyl monomer mixture (83% BA and 17% styrene (St)) and 0.375 parts of allyl methacrylate was continuously added to the polymerization device over 150 minutes. After the addition ended, 0.015 parts of potassium persulfate as a 2% aqueous solution was added to the polymerization device. Then, the polymerization was continued for 120 minutes, and a core containing the first and second layers (crosslinked elastomer (B1)) was obtained. The polymerization conversion rate was 99.0%, and the average particle size was 230 nm.

Subsequently, 0.023 parts of potassium persulfate as a 2% aqueous solution was added to the polymerization device. Then, 23 parts of a vinyl monomer mixture (80% MMA and 20% BA) were continuously added to the polymerization device over 45 minutes. As a result of continuing the polymerization for an additional 30 minutes, a latex of the graft copolymer particles (B1) containing a two-layer structured core (crosslinked elastomer (B1)) and a shell (graft polymer layer (B2)) was obtained. The polymerization conversion rate was 100.0%. The latex obtained was subjected to salting out and was flocculated with magnesium sulfate. Then, the solid content after the flocculation was rinsed with water and dried, so that graft copolymer particles (A) in a white powder form were obtained. The average particle size of the graft copolymer particles was 250 nm. The amount of each component is shown in Table 2.

### [Production Example 4: Graft copolymer particles (B)]

### Preparation of innermost-layer polymer:

A mixture of the following composition was introduced into a glass reaction vessel, and the temperature of the vessel was increased to 80°C while the mixture was stirred in a nitrogen stream. Subsequently, 25% of the mixed solution of (i) a monomer mixture containing 25 parts of methyl methacrylate and 1 part of allyl methacrylate and (ii) 0.1 parts of t-butyl hydroperoxide was introduced at a time, and the polymerization was carried out for 45 minutes.
220 parts of deionized water
0.3 parts of boric acid
0.03 parts of sodium carbonate
0.09 parts of sodium N-lauroyl sarcosinate
0.09 parts of sodium formaldehyde sulfoxylate
0.006 parts of ethylenediaminetetraacetic acid-2-sodium
0.002 parts of ferrous sulfate

Subsequently, the remaining 75% of this mixed solution was added continuously over 1 hour. After the addition ended, the resultant mixture was maintained at the same temperature for 2 hours. Thus, the polymerization was completed. In addition, during this period, 0.2 parts of sodium N-lauryl sarcosinate were added. The polymerization conversion rate (amount of polymerization produced/amount of monomers introduced) of the resultant innermost-layer crosslinked methacrylic-based polymer latex was 98%.

### Preparation of rubber particles:

The innermost layer polymer latex obtained was maintained at 80°C in a nitrogen stream, and 0.1 parts of potassium persulfate was added. Then, a monomer mixture containing 41 parts of n-butyl acrylate, 9 parts of styrene, and 1 part of allyl methacrylate was continuously added over 5 hours. During this period, 0.1 parts of potassium oleate were added in three doses. After the addition of the monomer mixed solution ended, additional 0.05 parts of potassium persulfate were added to complete the polymerization. The resultant mixture was maintained for 2 hours. The polymerization conversion rate of the resultant rubber particles was 99%.

### Preparation of graft copolymer:

The rubber particle latex obtained was maintained at 80°C, and 0.02 parts of potassium persulfate were added. Then, a monomer mixture containing 14 parts of methyl methacrylate and 1 part of n-butyl acrylate was continuously added over 1 hour. After the addition of the monomer mixed solution ended, the resultant mixture was maintained for 1 hour, so that a graft copolymer latex was obtained. The polymerization conversion rate was 99%.

### Preparation of graft copolymer particles:

The rubber particle latex obtained was maintained at 80°C. Then, a monomer mixture containing 5 parts of methyl methacrylate and 5 parts of n-butyl acrylate was continuously added over 0.5 hours. After the addition of the monomer mixed solution ended, the resultant mixture was maintained for 1 hour, so that a graft copolymer particle latex was obtained. The polymerization conversion rate was 99%.

The graft copolymer particle latex obtained was subjected to salting out and was flocculated with calcium chloride, and heat-treated and dried, so that graft copolymer particles (B) in a white powder form were obtained. The amount of each component is shown in Table 2.

**[Table 2]**

| | | Production Example 3 | Production Example 4 |
|---|---|---|---|
| 1st layer | MMA | 26.2 | 25 |
| | BA | 0.8 | |
| | Allyl methacrylate (ALMA) | 0.036 | 1 |
| | Potassium persulfate | 0.027 | |
| | t-butyl hydroperoxide | | 0.1 |
| 2nd layer | BA | 41.5 | 41 |
| | St | 8.5 | 9 |
| | Allyl methacrylate (ALMA) | 0.375 | 1 |
| | Potassium persulfate | 0.08 | 0.15 |
| 3rd layer | MMA | 18.4 | 14 |
| | BA | 4.6 | 1 |
| | Potassium persulfate | 0.023 | 0.02 |
| 4th layer | MMA | | 5 |
| | BA | | 5 |
| Rubber part particle size | nm | 250 | 250 |

### [Example of production 5: Example of production of glutarimide

A glutarimide acrylic-based resin was produced using polymethyl methacrylate as a raw material and monomethyl amine as an imidization agent.

In this production, a tandem reaction extruder in which two extrusion reactors were arranged in series was used. The tandem reaction extruder used was an intermeshed co-rotating twin-screw extruder in which the first extruder and the second extruder each had a diameter of 75 mm and the ratio L/D (ratio between the length L and the diameter D) was 74. A low-weight feeder (manufactured by KUBOTA Corporation) was used to supply the raw material supply opening of the first extruder. The degree of depressurization of each vent in the first extruder and the second extruder was set as -0.095 MPa. In addition, the first extruder and the second extruder were connected via a pipe having a diameter of 38 mm and a length of 2 m. A constant flow pressure valve was used for an in-component pressure control mechanism that connects the resin discharge opening of the first extruder and the raw material supply opening of the second extruder. The resin discharged from the second extruder was cooled with a cooling conveyor, and was then made into cut pellets with a pelletizer. For adjusting the pressure in the component connecting the resin discharge opening of the first extruder and the raw material supply opening of the second extruder, or for determining extrusion variations, a resin pressure gauge was provided at the discharge opening of the first extruder, the center part of the component connecting the first and second extruders, and the discharge opening of the second extruder.

In the first extruder, a polymethyl methacrylate resin (Mw: 105,000) was used as a raw material resin, and monomethyl amine was used as an imidization agent to produce an imide resin intermediate 1. At this time, the temperature of the highest-temperature part of the extruder was 280°C, the screw rotation speed was 55 rpm, the amount of the raw material resin supplied was 150 kg/hour, and the amount of monomethyl amine added was 2.0 parts, relative to 100 parts of the raw material. The constant flow pressure valve was provided immediately before the raw material supply opening of the second extruder, and the pressure of the monomethyl amine press-fit part of the first extruder was adjusted to be 8 MPa.

In the second extruder, after the imidization agent and the by-product that remained in the rear vent and vacuum vent were degassed, dimethyl carbonate was added as an esterifying agent, so that an imide resin intermediate 2 was produced. At this time, each barrel temperature of the extruder was 260°C, and the screw rotation speed was 55 rpm. The amount of dimethyl carbonate added was 3.2 parts relative to 100 parts of the raw material resin. Furthermore, the esterifying agent was removed with the vents, extruded from the strand die, cooled in a water tank, and pelletized with a pelletizer, so that a glutarimide acrylic-based resin was obtained.

The glutarimide acrylic-based resin obtained was subjected to the above method to measure the imidization rate, the amount of glutarimide units contained, the acid value, and the glass transition temperature. The results showed that the imidization rate was 13%, the amount of glutarimide units contained was 7% by weight, the acid value was 0.4 mmol/g, and the glass transition temperature was 124°C.

### [Production Example 6]

The graft copolymer particles (A) and (B) obtained in a powder form, PARAPET HM (manufactured by KURARAY CO., LTD.; 100% by weight of methyl methacrylate), and AO60 (manufactured by ADEKA CORPORATION) were each blended in the amounts (parts) shown in Table 3. The resultant mixture was mixed using a Henschel Mixer. Then, with use of a 58-mm ϕ-vent co-rotating twin-screw extruder (TEM58 (L/D=41.7) manufactured by Toshiba Machine Co., Ltd.) in which the cylinder temperature was adjusted to 190°C to 250°C, melting and kneading were carried out with a screw rotation speed of 150 rpm and a discharge quantity of 180 kg/hour. Then, the resultant product was taken in strands, cooled in a water tank, and then cut using a pelletizer, so that pellets were obtained. The die used had Φ4.5×15 holes. Leaf disc filter equipment (manufactured by NAGASE & CO., LTD.; the filtration accuracy was 10 µ, the size was 7 inches, and the number of filters was 33 sheets) was provided as a polymer filter between the die and the head of the extruder. With use of a 90 mmΦ single-screw extruder equipped with a T-die, the obtained pellets were melted and kneaded at a cylinder set temperature of 180°C to 240°C and at a discharge quantity of 150 kg/hour, discharged from the T-die at a die temperature of 240°C. While both surfaces of the resultant product were brought into contact with rolls including a metal casting roll having a temperature adjusted to 90°C and a touch roll equipped with elastic metal sleeve having a temperature adjusted to 60°C to cool and solidify the product so as to form the product into a film, the film was rolled up. Thus, a film having a thickness of 175 µm was obtained.

### [Production Example 7]

A film was produced as in Production Example 5, except that PAPAPET HM (manufactured by KURARAY CO., LTD.; 100% by weight of methyl methacrylate) was changed to SUMIPEX EX (manufactured by Sumitomo Chemical Co., Ltd.; a methacrylic ester-based resin containing 95% by weight of methyl methacrylate/5% by weight of methyl acrylate).

### [Production Example 8]

A film was produced as in Production Example 5, except that PAPAPET HM (manufactured by KURARAY CO., LTD.; 100% by weight of methyl methacrylate) was changed to a glutarimide acrylic-based resin.

### [Production Examples 9 through 11]

A film was produced as in Production Example 6, except that the types of rubbers and the component contents were changed as shown in Table 3 and that the additive was not changed.

**[Table 3]**

| | | | PE6 | PE7 | PE8 | PE9 | PE10 | PE11 |
|---|---|---|---|---|---|---|---|---|
| Film formulation | PMMA | Type | MMA=100 | MMAIMA=9515 | Glutarimide acrylic resin | MMA/MA=95/5 | MMA/MA=95/5 | MMAIMA=9515 |
| | | Amount | 66 | 66 | 66 | 62.4 | 69.6 | 75 |
| | Graft copolymer particles (A) | Type | PE1 | PE1 | PE1 | PE2 | PE2 | PE2 |
| | | (A1) | 9.0 | 9.0 | 9.0 | 10.4 | 8.6 | 6.4 |
| | | Amount | 30 | 30 | 30 | 34.5 | 28.5 | 21.2 |
| | Graft copolymer particles (B) | Type | PE3 | PE3 | PE3 | PE4 | PE4 | PE4 |
| | | (B1) | 2 | 2 | 2 | 1.55 | 0.95 | 1.9 |
| | | Amount | 4 | a | 4 | 3.1 | 1.9 | 3.8 |
| | Additive | Type | AO60 | AO60 | AO60 | | | |
| | | Amount | 0.6 | 06 | 0.6 | | | |
| Glass transition temperature (Tg) | | ºC | 119 | 110 | 122 | 110 | 110 | 110 |
| Film thickness | | µm | 175 | 175 | 175 | 175 | 175 | 175 |

| | | | | | | | | |
|---|---|---|---|---|---|---|---|---|
| • "PE" stands for "Production Example". | | | | | | | | |

### [Preparation of coating material]

### (Coating material 1)

Propylene glycol monomethyl ether (PGM) was blended with Z607-5AFH (manufactured by Aica Kogyo Co., Ltd.; solid content concentration of 30%) so that the solid content concentration was 20%.

### (Coating material 2)

Z607-5AFH (manufactured by Aica Kogyo Co., Ltd.; solid content concentration of 30%) and alumina particles (Z-607-ALU; manufactured by Aica Kogyo Co., Ltd.; solid content concentration of 30%) were blended at a ratio of 9:1. Propylene glycol monomethyl ether (PGM) was blended so that the solid content concentration was 20%.

### (Coating materials 3 through 7)

In the amounts shown in Table 4, the coating materials 3 through 7 were blended as in the cases of the coating materials 1 and 2. Each main agents in Table 4 is a urethane acrylate resin.

**[Table 4]**

| | | CM1 | CM2 | CM3 | CM4 | CM5 | CM6 | CM7 |
|---|---|---|---|---|---|---|---|---|
| Main agent | Z607-5AFH (30% solid content) | 10 | 9 | | | | | |
| | Z607-26AFH (30% solid content) | | | 10 | 9 | | | |
| | RC29-124 (30% solid content) | | | | | 10 | | |
| | Z607-10AFH (30% solid content) | | | | | | 10 | |
| | MOL3100 (30% solid content) | | | | | | | 10 |
| Additive (alumina) | Z-807-ALU (30% solid content) | 0 | 1 | 0 | 1 | | | |
| Solvent | PGM | 5 | 5 | 5 | 5 | 0 | 5 | |
| | MEK | | | | | | 2.5 | 5 |

| | | | | | | | | |
|---|---|---|---|---|---|---|---|---|
| * "CM" stands for "Coating Material". | | | | | | | | |

### [Examples 1 through 12 and Comparative Examples 1 through 12]

The coating materials 1 through 7 were applied in the combinations shown in Tables 5 and 6 to the films obtained in Production Examples 6 through 11 or AW10U (PCPMMA multilayer film). A gravure roll having 200 lines for 1 µ, 150 lines for 2 µ, and 120 lines for 3.5 µ was used, with the line speed being 20 m/min and the rotation speed of the gravure roll being 20 rpm. After the coating, the resultant product was dried at 80°C for 1 minute to volatilize the solvent. The resultant product was irradiated with ultraviolet light, the cumulative UV amounts of which are shown in Tables 5 and 6, so that hard coat layers having thicknesses shown in Tables 5 and 6 were formed. Various characteristics of the films and laminates obtained were evaluated. The results are shown in Tables 5 and 6.

In Comparative Examples 5 through 7, in which PCPMMA multilayer films were used, Tg of PMMA (115°C) and Tg of PC (144°C) were exhibited. The higher Tg in the multilayer film was regarded as the Tg of the acrylic-based resin film.

**[Table 5]**

| | | | | Ex 1 | Ex. 2 | Ex 3 | Ex 4 | Ex. 5 | Ex 6 |
|---|---|---|---|---|---|---|---|---|---|
| | Film type | | | PE6 | PE6 | PE6 | PE6 | PE6 | PE6 |
| | Hard coat type | | | CM2 | CM2 | CM2 | CM2 | CM2 | CM2 |
| | Hard coat thickness | | µm | 1 | 2 | 3.5 | 2 | 2 | 2 |
| | Cumulative UV light amount | | mJ/cm² | 360 | 360 | 360 | 190 | 270 | 400 |
| | UV cooling roller temperature | | ºC | 50 | 50 | 50 | 50 | 50 | 50 |
| Acrylic-based resin film | Film physical properties | Glass transition temperature (Tg) | ºC | 119 | 119 | 119 | 119 | 119 | 119 |
| | | Elongation at tensile fracture (120ºC) | % | 200 or more | 200 or more | 200 or more | 200 or more | 200 or more | 200 or more |
| | | Pencil hardness | Load 750 g | HB | HB | HB | HB | HB | HB |
| | | Elongation at tensile fracture (23ºC) | % | 54 | 54 | 54 | 54 | 54 | 54 |
| Laminate | Moldability | Molding-achievable curvature radius (height 3 mm) | mm | 0.3 **or** less | 0.3 **or** less | 0.3 **or less** | 0.3 **or** less | 0.3 **or** less | **0.3 or** less |
| | Steel wool wearability | 50 g/cm² **an** 5 reciprocating motions | Δhaze | 0.4 | 0.3 | 0.2 | 0.2 | 0.1 | 0.1 |
| | | 50 g/cm² and 10 reciprocating motions | Δhaze | 3.5 | 0.2 | 0.2 | 0.3 | 0.4 | 0.2 |
| | Pencil hardness | | Load 750 g | 2H | 2H | 2H | 2H | 2H | 2H |
| | Crack elongation | | Molding temperature (ºC) | 120 | 120 | 120 | 120 | 120 | 120 |
| | | | Elongation (%) | 90 | 70 | 60 | 85 | 80 | 65 |
| | Phase difference | Re | nm | 1.3 | 1.1 | 1.5 | 1.3 | 1.2 | 1.4 |
| | | Rth | nm | -4.8 | -4.3 | -4.6 | -4.5 | -5.2 | -5.1 |
| | ΔE after weather resistance test | | | 0.5 | 0.3 | 0.3 | 0.4 | 0.3 | 0.2 |

| | | | | Ex. 7 | Ex. 8 | Ex. 9 | Ex. 10 | Ex. 11 | Ex. 12 |
|---|---|---|---|---|---|---|---|---|---|
| | Film type | | | PE6 | PE7 | PES | PE6 | PE6 | PE6 |
| | Hard coat type | | | CM2 | CM2 | CM2 | CM1 | CM3 | CM4 |
| | Hard coat thickness | | µm | 2 | 2 | 2 | 2 | 2 | 2 |
| | Cumulative UV light amount | | mJ/cm² | 360 | 360 | 360 | 360 | 360 | 360 |
| | UV cooling roller temperature | | ºC | 60 | 50 | 50 | 50 | 50 | 50 |
| Acrylic-based resin film | Film physical properties | Glass transition temperature (Tg) | °C | 119 | 110 | 122 | 119 | 119 | 119 |
| | | Elongation at tensile fracture (120ºC) | % | 200 or more | 200 or more | 200 or more | 200 or more | 200 or more | 200 or more |
| | | Pencil hardness | Load: 750 q | HB | HB | HB | HB | HB | HB |
| | | Elongation at tensile fracture (23ºC) | % | 54 | 58 | 45 | 54 | 54 | 54 |
| Laminate | Moldability | Molding-achievable curvature radius (height: 3 mm) | mm | 0.5 | 0.3 or less | 0.3 or less | 0.3 or less | 0.3 or less | 0.3 or less |
| | Steel **wool** wearability | 50 g/cm² **an** 5 reciprocating motions | Δhaze | 0.1 | 0.1 | 0.1 | 0.4 | 0.3 | 0.1 |
| | | 50 g/cm² and 10 reciprocating motions | Δhaze | 0.3 | 0.2 | 0.2 | 0.7 | 0.5 | 0.2 |
| | Pencil hardness | | Load: 750 g | 2H | 2H | 2H | 2H | 2H | 2H |
| | Crack elongation | | **Molding temperature** (ºC) | 120 | 120 | 120 | 120 | 120 | 120 |
| | | | Elongation (%) | 55 | 70 | 70 | 70 | 60 | 60 |
| | Phase difference | Re | nm | 1.5 | 1.1 | 0.8 | 1.2 | 1.4 | 1.4 |
| | | Rth | nm | -4.6 | -4.3 | -2.7 | -4.1 | -5.1 | -4.4 |
| | ΔE after weather resistance **test** | | | 0.4 | 0.2 | 0.2 | 0.2 | 0.3 | 0.4 |

| | | | | | | | | | |
|---|---|---|---|---|---|---|---|---|---|
| * "Ex." stands for "Example". * "PE" stands for "Production Example". * "CM" stands for "Coating Material". | | | | | | | | | |

**[Table 6]**

| | | | | CE1 | CE2 | CE3 | CE4 | CE5 | CE6 |
|---|---|---|---|---|---|---|---|---|---|
| | Film type | | | PE6 | PE6 | PE6 | PE7 | AW10U (PCPMMA multilayer film) | AW10U (PCPMMA multilayer film) |
| | Hard coat type | | | CM2 | CM2 | CM2 | CM2 | CM2 | CM2 |
| | Hard coat thickness | | µm | 0.5 | 2 | 2 | 2 | 3.5 | 3.5 |
| | Cumulative UV light amount | | mJ/cm³ | 360 | 50 | 360 | 360 | 270 | 270 |
| | UV cooling roller temperature | | °C | 50 | 50 | 30 | 30 | 50 | 30 |
| Acrylic-based Resin film | Film physical properties | Glass transition temperature (Tg) | °C | 119 | 119 | 119 | 110 | 144 | 144 |
| | | Elongation at tensile fracture (120*C) | % | 200 or more | 200 or more | 200 or more | 200 or more | Impossible | Impossible |
| | | Pencil hardness | Load: 750 g | HB | HB | HB | HB | B | B |
| | | Elongation at tensile fracture (23°C) | % | 54 | 54 | 54 | 58 | 15 | 15 |
| Laminate | Moldability | Molding-achievable curvature radius (height: 3 mm) | mm | 0.3 or less | 0.3 or less | 0.3 or less | 0.3 or less | 2.5 | 2 |
| | Steel wool wearability | 50 g/cm² and 5 reciprocating motions | Δhaze | 1.2 | 1.3 | 1.1 | 1.1 | 0.2 | 1.5 |
| | | 50 g/cm² and 10 reciprocating motions | Δhaze | 1.3 | 1.4 | 1.4 | 1.3 | 0.5 | 1.9 |
| | Pencil hardness | | Load: 750 g | H | H | 2H | 2H | H | H |
| | Crack elongation | | Molding temperature (°C) | 120 | 120 | 120 | 120 | 160 | 160 |
| | | | Elongation (%) | 100 | 115 | 85 | 85 | 30 | 35 |
| | Phase difference | Re | nm | 1.2 | 1.3 | 1.2 | 1.5 | 39 | 40 |
| | | Rth | nm | -5.1 | -4.1 | -4.5 | -4.2 | 187 | 190 |
| | ΔE after weather resistance test | | | 0.1 | 0.2 | 0.4 | 0.3 | 5.9 | 5.6 |

| | | | | CE7 | CE8 | CE9 | CE10 | CE11 | CE12 |
|---|---|---|---|---|---|---|---|---|---|
| | Film type | | | AW10U (PCPMMA multilayer film) | PE6 | PE6 | PE9 | PE10 | PE11 |
| | Hard coat type | | | CM2 | CM6 | CM7 | CM5 | CM5 | CM5 |
| | Hard coat thickness | | µm | 2 | 2 | 2 | 4 | 4 | 4 |
| | Cumulative UV light amount | | mJ/cm² | 360 | 360 | 360 | 748 4 | 748.4 | 748.4 |
| | UV cootinq roller temperature | | °C | 50 | 50 | 50 | N/A | N/A | N/A |
| Acrylic-based Resin film | Film physical properties | Glass transition temperature (Tg) | °C | 144 | 119 | 119 | 110 | 110 | 110 |
| | | Elongation at tensile fracture (120°C) | % | Impossible | 200 or more | 200 or more | 200 or more | 200 or more | 200 or more |
| | | Pencil hardness | Load: 750 g | B | HB | HB | HB | F | F |
| | | Elongation at tensile fracture (23°C) | % | 15 | 54 | 54 | 51 | 35 | 31 |
| Laminate | Moldability | Molding-achievable curvature radius (height: 3 mm) | mm | 1.5 | 2.5 | 0.3 or less | 2 | 2 | 2 |
| | Steel wool wearability | 50 g/cm² and 5 reciprocating motions | Δhaze | 0.3 | 0.1 | 2.4 | 0.1 | 0.2 | 0.1 |
| | | 50 g/cm² and 10 reciprocating motions | Δhaze | 0.3 | 0.1 | 2 5 | 0.3 | 0 4 | 0.5 |
| | Pencil hardness | | Load: 750 g | H | 2H | H | H | H | H |
| | Crack elongation | | Molding temperature ('C) | 160 | 120 | 120 | 120 | 120 | 120 |
| | | | Elongation (%) | 40 | 20 | 120 | 30 | 30 | 30 |
| | Phase difference | Re | nm | 45 | 1.2 | 1.1 | 1.1 | 1.2 | 1.3 |
| | | Rth | nm | 194 | -4.1 | -3.9 | -4.1 | -4.8 | -4.4 |
| | ΔE after weather resistance test | | | 5.4 | 0.2 | 0.3 | 0.2 | 0.1 | 0.4 |

| | | | | | | | | | |
|---|---|---|---|---|---|---|---|---|---|
| * "CE" stands for "Comparative Example". * "PE" stands for "Production Example". * "CM" stands for "Coating Material". | | | | | | | | | |

### [Results]

Tables 5 and 6 revealed that excellent moldability and wear resistance are achieved by the laminates in Examples, which include an acrylic-based resin film having a glass transition temperature of not higher than 140°C and an elongation at break of not less than 200% at 120°C and a specific hard coat layer, the laminates exhibiting a crack elongation of not less than 50% at 120°C and a Δhaze of not more than 1.0% in a steel wool wear test at 50 g/cm² and 5 reciprocating motions. Meanwhile, it was found that the laminates in Comparative Examples, which do not meet at least one of the parameters, cannot achieve moldability and wear resistance simultaneously.

### Industrial Applicability

The present laminate has excellent moldability and excellent wear resistance, and can therefore be suitably used in various fields including those in which the present laminate can be applied to an automobile interior such as an on-vehicle display.

## Claims

1. A laminate comprising:
an acrylic-based resin film; and
a hard coat layer that is laminated on at least one side of the acrylic-based resin film,
the acrylic-based resin film having a glass transition temperature of not higher than 140°C and an elongation at break of not less than 200% at 120°C, and
the laminate exhibiting a crack elongation of not less than 50% at 120°C and a Δhaze of not more than 1.0% in a steel wool wear test at 50 g/cm² and 5 reciprocating motions.

2. The laminate according to claim 1, wherein the laminate has at least one selected from the group consisting of the following physical properties:
a phase difference (Re) is not more than 38 nm; and
a ΔE after a weather resistance test is not more than 5.2%.

3. The laminate according to claim 1 or 2, wherein the hard coat layer is a cured product of a resin composition containing a polyfunctional (meth)acrylate and a photopolymerization initiator.

4. The laminate according to any one of claims 1 through 3, wherein:
the acrylic-based resin film contains 1% by mass to 70% by mass of graft copolymer particles (A) having an average particle size of 20 nm to 200 nm and not more than 20% by mass of graft copolymer particles (B) larger in average particle size than the graft copolymer particles (A); and
the acrylic-based resin film contains a crosslinked elastomer (A1) and a crosslinked elastomer (B1) in a total amount of not more than 15% by mass.

5. The laminate according to claim 4, wherein the graft copolymer particles (B) have an average particle size of not less than 150 nm and are contained in an amount of 1% by mass to 10% by mass.

6. The laminate according to any one of claims 1 through 5, wherein a surface of the acrylic-based resin film, on which surface the hard coat layer is not laminated, has a pencil hardness of B or more and the acrylic-based resin film has an elongation at break of not less than 20% at 23°C.

7. The laminate according to any one of claims 4 through 6, wherein the graft copolymer particles (A) contain a reactive ultraviolet absorber agent in an amount of 0.01% by mass to 5% by mass.

8. A molded product comprising a laminate according to any one of claims 1 through 7.

9. An on-vehicle display front panel comprising a molded product according to claim 8.

10. A production method for laminate which includes
acrylic-based resin film and
a hard coat layer laminated on at least one side of acrylic-based resin film,
said method comprising
a curing step of said hard coat layer carried out on a cooling roller by UV irradiation on the hard coat layer applied to at least one side of the acrylic-based resin film,
a cumulative amount of UV light in the UV irradiation being 150 mJ/cm² to 500 mJ/cm²,
the cooling roller having a temperature of 25°C to 70°C,
the acrylic-based resin film having a glass transition temperature of not higher than 140°C and an elongation at break of not less than 200% at 120°C, and
the laminate exhibiting a crack elongation of not less than 50% at 120°C and a Δhaze of not more than 1.0% in a steel wool wear test at 50 g/cm² and 5 reciprocating motions.

11. A method of producing a molded product, comprising
the step of shaping the following laminate with a molding temperature during preforming being not higher than 140°C:
the laminate comprising
an acrylic-based resin film and
a hard coat layer that is laminated on at least one side of the acrylic-based resin film,
the acrylic-based resin film having a glass transition temperature of not higher than 140°C and an elongation at break of not less than 200% at 120°C, and
the laminate exhibiting a crack elongation of not less than 50% at 120°C and a Δhaze of not more than 1.0% in a steel wool wear test at 50 g/cm² and 5 reciprocating motions.
